# EUROPEAN PATENT SPECIFICATION

(11) **EP 2 786 027 B1**
(45) Date of publication and mention of the grant of the patent: **24.02.2021**
(21) Application number: 12813499.6
(22) Date of filing: 29.11.2012
(51) Int. Cl.: F16B 12/24, F16B 12/26, A47B 95/00

(54) **PIECE OF FURNITURE AND METHOD FOR MANUFACTURING FURNITURE**
MÖBELSTÜCK UND VERFAHREN ZUR MÖBELHERSTELLUNG
MEUBLE ET PROCÉDÉ DE FABRICATION DE MEUBLE

(30) Priority: 01.12.2011 US 201161565759 P; 22.03.2012 US 201261614306 P; 31.05.2012 BE 201200364; 31.05.2012 US 201261653648 P
(43) Date of publication of application: 08.10.2014
(60) Divisional application: 21150481.6
(73) Proprietor: Unilin, BV, 8710 Wielsbeke (BE)
(72) Inventor: MAERTENS, Luc, 8850 Ardooie (BE); VAN HOOYDONCK, Guy, 2900 Schoten (BE)
(74) Representative: Vangheluwe, Lieven Germain L.
(86) International application number: PCT/IB2012/056838
(87) International publication number: WO 2013/080160

(56) References cited:
- EP-A1- 1 418 345
- DE-A1- 2 044 096
- DE-U1- 20 103 728
- FR-A1- 2 572 668
- US-A- 5 775 860
- US-A1- 2007 253 794

## Description

This invention relates to a piece of furniture.

DE 20103728, upon which the preamble of claim 1 is based, describes a cupboard-mounting apparatus. The cupboard-mounting apparatus has a base plate and a suspension hook connected thereto. The base plate, in the installed state, rests on the outer side of a rear wall of a cupboard unit and is provided with bearing parts which can be driven into boreholes in a side wall of the cupboard unit. The base plate can be fixed against the rear wall of the cupboard unit by fastening means. These fastening means may comprise straddling dowels, wherein a locking pin can be driven into a through-channel in the dowels in order to ensure the assembled position of the dowels.

The invention aims to provide a piece of furniture which comprises one or more furniture fitting elements, wherein the piece of furniture at least provides in an alternative manner for attaching one or more of the furniture fitting elements. More particularly, the aim is to achieve simple attachment techniques for the furniture fitting.

In a preferred embodiment, attachment techniques are striven for which allow an attachment without using tools. This is particularly useful with furniture wherein the components, amongst which the actual furniture parts and/or furniture panels, can be put together even without tools, such that the use of tools can be entirely excluded.

In order to strive for one or more of these objectives, the invention relates to a piece of furniture as defined in claim 1, which piece of furniture comprises one or more furniture parts as well as one or more furniture fitting elements, which are connected to the furniture parts via attachments, wherein at least one of said attachments is formed by, on the one hand, an opening in the wall of the respective furniture part, wherein this opening is provided with at least one collar, and, on the other hand, an attachment element which works in conjunction with the respective furniture fitting element and which can be provided in said opening, wherein this attachment element is provided with one or more locking parts which engage behind the collar or collars. It is clear that in this manner an attachment is provided which is simpler in its use, as classical screw connections can be excluded or limited.

According to the invention, by a collar a pre-formed collar has to be understood. By a furniture part, any component part of a piece of furniture has to be understood, wherein thus any wall part or any other part of a piece of furniture can be considered in this respect.

Preferably, the collar and the one or more locking parts are well-matched to each other, which means that their locations are matched to each other, contrary to, for example, a generally spreadable element which is tensioned behind a collar by tensioning.

Preferred embodiments of the invention are described in the appended claims and the detailed description, which detailed description also describes other embodiments which serve as examples that are useful for understanding the invention.

In respect to the opening, the piece of furniture preferably shows one or more of the following characteristics, wherein these characteristics can be combined according to all not contradictory combinations:
- that the opening is configured as a local opening or hole;
- that the opening is configured as an opening with a bottom, more particularly as a blind hole;
- that the opening is configured at least partially and preferably entirely as a cutout which is the result of an axially inserted rotating cutting tool, which possibly has been subjected to an eccentric motion, such as a drilling treatment, by which an undercut is realized, as well;
- that the opening, including the collar, is realized in one piece in the wall of the respective furniture part, in the board material, of which said wall forms a part;
- that the opening is formed at least partially and preferably entirely as a cutout;
- that the opening is configured as a shaft or narrow portion and that the collar is formed by a widened portion;
- that the collar is cylindrical;
- that in cross-section, the collar is inclined; either with a straight contour or with a curved contour or with a combination of both;
- that the opening is configured as a groove, with a collar at least on one side;
- that the collars are configured as successive teeth of a toothing.

According to the invention, the piece of furniture is characterized in that said wall forms part of a whether or not covered particle board; that this particle board comprises at least two layers of particle material, a first layer which substantially is present in the core of the particle board, and a second layer which is present close to the wall, wherein the second layer consists of on average finer particle material than the first layer; and that said collar substantially is made of the finer particle material, and preferably the surface itself of the collar still is formed in the finer particle material. The advantages thereof will be explained in the detailed description.

According to another preferred embodiment, the wall forms part of a board, preferably a particle board or wood fiberboard, and the board at said wall is melaminated, preferably via a covering of the HPL or DPL type. Such coverings are rather hard and offer a reinforcement around the opening, such that the risk remains small that the underlying material of the collar will break off.

According to a preferred embodiment, said attachment element preferably provides an attachment mechanism allowing screwless assembly and still better allowing toolless assembly and in particular allowing manual assembly without necessitating any tools.

Preferably, the attachment element is configured such that it can be mounted by means of an insertion movement and, by means of such insertion movement, can be brought into a locking condition. The parts of the attachment element can be realized such that they have to be provided one after the other in the opening which is provided with said collar, such as will become clear from the examples described herein below.

In respect to the attachment element, the piece of furniture preferably shows one or more of the following characteristics, wherein these characteristics can be combined according to all not contradictory combinations:
- that the attachment element comprises an attachment part with one or more locking parts which are movable radially outward in order to engage behind said collar or collars;
- that the attachment element comprises two or more locking parts which are arranged distributed along the circumference; that the locking parts are situated on elastically radially bendable lips, wherein these locking parts are made as hook-shaped outward-directed parts; and that the locking parts, when they together are located in their most inward-situated condition, circumscribe a volume which fits freely through said opening;
- that the attachment element comprises an attachment part which can be snapped into the opening, with one or more locking parts which engage behind said collar or collars;
- that the one or more locking parts are arranged elastically resilient, such that, when being provided, they first are elastically displaced in order to then providing, by their own elasticity, for the snap effect and engagement behind the collar or collars;
- that the locking parts comprise activating means for bringing them from a first condition, in which the locking parts do not cooperate with the collar or only partially cooperate therewith, into a second condition in which they positively engage behind the collar;
- that the locking parts comprise means by which they can snap in a first position and in a second position are blocked in the locked condition;
- that the attachment element is detachable from the opening, for example, by applying inclined edges which allow a pulling loose with a certain force, or by applying explicit means which allow a detaching operation, such as unlocking means;
- that the attachment element is configured as part which can be hung in or hooked in and which engages behind the collar, for example, by means of a turning-in movement;
- that the attachment element is realized as a separate element;
- that the attachment element comprises a plug-shaped attachment part on which the locking parts are provided;
- that the attachment element works in conjunction with the furniture fitting element in that it is provided in the furniture fitting element through an opening:
- that the furniture fitting element and/or the attachment element comprises means allowing pre-mounting the attachment element on the furniture fitting element, for example, by snapping-on or the like;
- that the attachment element is at least partially and preferably entirely made in one piece with the furniture fitting element;
- that the attachment elements are fixed to the furniture fitting element in fixed position, by pre-assembly or by being in one piece, such that this latter can be taken and can be pressed home in the respective openings;
- that the one or more locking parts are provided with inclined locking surfaces;
- that the attachment comprises centering contact parts, for example, centering seats;
- that the furniture fitting element is retained against the wall by means of the attachment element.

According to the invention, the attachment element consists at least of a first part and a second part, which either are connected to each other or not, wherein the first part comprises one or more of said locking parts and the second part functions as activating means.

In accordance with the invention, the attachment element comprises locking means which can lock the first part and the second part in mutual respect when said locking parts engage behind the collar.

Further, the piece of furniture can be characterized by one or more of the following features:
- that the second part is made as a plug-shaped element which can be provided in the first part and in this manner forces and/or holds the locking parts in a locking position;
- that the first part comprises a stop-forming portion which can work in conjunction with the furniture fitting element, as well as locking parts which can work in conjunction with the collar;
- that the second part consists of a plug-shaped element which is provided with a stop-forming portion;
- that the attachment element comprises means which retain the second part at the first part, in a not yet activated condition of the locking parts;
- that said means consist of any of the following or a combination of two or more of the following possibilities:
   - retaining means which retain the second part in the first part;
   - retaining means which retain the second part in the first part by means of a locking:
   - retaining means which retain the second part in the first part by means of a locking, wherein said locking can be overcome by exerting a certain force thereon;
   - retaining means which retain the second part positioned in front of the first part;
   - a material connection between the second part and the first part, which preferably is made in one piece with the first part and the second part;
   - a material connection which can be broken;
   - a material connection between the second part and the first part in the form of a connection string or connection lip;
   - a material connection between the second part and the first part in the form of a connection lip, wherein this connection lip comprises a hinge or a folding or tearing zone, preferably such that the lip or the lip portions which are located on opposite sides of the hinge, will extend along the furniture fitting element after mounting.

Further, it is preferred that the attachment element as a whole can be inserted from one side of the opening, which means that no use is made of a through hole, wherein an additional counterpart has to be inserted from the rear part for achieving a locking effect.

It is clear that all applied components can be realized of any suitable material. Metal and/or synthetic material are recommended most. In a practical embodiment, the furniture fitting elements substantially consist of metal, whereas the attachment elements, if they are not made in one piece with the furniture fitting element, consist at least partially and preferably entirely of synthetic material. However, it is clear that this choice of material is not restrictive. So, in certain applications, the furniture fitting elements may also consist, for example, of synthetic material. In the case of supports for a shelf, in fact the whole, including the attachment element applied thereby, may consist of synthetic material.

For the synthetic material, in particular of the attachment elements or certain components thereof, any suitable synthetic material can be applied. Herein, in particular nylon, synthetic on the basis of POM resin (Polyoxymethylene), PVC and the like is considered. It is clear that the suitability of a synthetic material can be determined by those skilled in the art by performing the necessary tests, amongst others, in respect to strength, loading capacity, required elasticity, deformability, for example, by welding on during pre-assembly, and so on. Possibly, reinforced synthetic materials can be applied, for example, fiber reinforced synthetic materials and more particularly glass fiber reinforced synthetic materials.

It is clear that the most suitable technique for forming the synthetic material components consists of injection molding, whether or not combined with other treatments; however, other manufacturing techniques are not excluded either.

It is clear that the invention can be applied in combination with a variety of furniture fitting elements. However, it fully shows its advantages with guides or slides for a drawer, as well as with hinges or supports for a shelf. Other applications are, for example, for attaching a handle, a bed hook for connecting bed components, a support element for supporting a bed base in a bed frame, and so on.

Further, a piece of furniture as described herein above, can comprise one or more furniture fitting elements which as such are attached to the furniture part exclusively by one or more attachments as mentioned above, in such a manner that these one or more furniture fitting elements can be attached to the respective wall without using tools.

The invention can be applied in a variety of furniture, however, more particularly the invention will be applied with the following kinds of furniture:
- a so-called RTA piece of furniture (Ready-to-assemble piece of furniture);
- a piece of furniture which can be assembled entirely without tools;
- a flat-pack piece of furniture;
- a piece of kitchen furniture or a carcass for a piece of kitchen furniture;
- a piece of bathroom furniture or a carcass for a piece of bathroom furniture;
- a piece of furniture wherein the majority of the furniture panels engage in each other by means of locking profiles, preferably profiles formed in one piece in the panel material.

Further, a piece of furniture can be provided with a back with one or more back parts, with the characteristic that for the attachment of one or more of the back parts an analogous attachment is applied as described herein above or herein below, too.

With the intention of better showing the characteristics of the invention, herein, as an example without any limitative character, some preferred embodiments as well as other embodiments which serve as examples that are useful for understanding the invention are described, with reference to the accompanying drawings, wherein:
Figure 1 schematically represents a part of a piece of furniture, wherein a drawer slide is fixed at a wall;
Figure 2, at a larger scale, represents a cross-section according to line II-II in figure 1;
Figure 3, at a still larger scale, represents the portion indicated by F3 in figure 2;
Figures 4, 5 and 6 represent cross-sections, according to lines IV-IV, V-V and VI-VI in figure 3, respectively;
Figure 7, in a view similar to that of figure 3, represents a variant;
Figures 8 to 16 in cross-section represent various embodiments of openings which are realized in the wall of a furniture part;
Figures 17 to 32 represent some more variants;
Figure 33 represents an application, wherein a part of a hinge is attached to a furniture part;
Figure 34 represents a cross-section according to line XXXIV-XXXIV in figure 33;
Figures 35 and 36 represent another two applications;
Figures 37 and 38 show another two particular embodiments;
Figure 39 represents a deviating application;
Figure 40, at a larger scale, represents a cross-section according to line XL-XL in figure 39;
Figure 41, for a variant, represents a view similar to that of figure 30;
Figure 42 and 43 schematically represent a method for realizing an opening with a collar;
Figures 44-45, 46 and 47-48 represent another three methods for realizing an opening with a collar;
Figure 49 in perspective represents an attachment element of a piece of furniture according to the invention;
Figure 50 represents the attachment element of figure 49 in a side view and partially cut through;
Figure 51 represents a view according to arrow F51 in figure 50;
Figure 52 in cross-section represents an application of the attachment element of figures 49-50;
Figure 53 to 55 represent three applications in which the attachment element of figure 49 is applied;
Figure 56 in perspective represents a support for a shelf with an integrated thereon attachment element according to the invention;
Figure 57 represents the support of figure 56 in a side view;
Figure 58 represents a view according to arrow F58 in figure 57;
Figure 59 in cross-section represents a view of an application in which the support of figure 56 is applied;
Figure 60 represents a cross-section according to line LX-LX in figure 59;
Figure 61 represents another attachment element of a piece of furniture according to the invention;
Figure 62 represents a view similar to that of figure 61, however, in the final locked condition;
Figures 63 to 73 represent another number of attachment possibilities of which the ones shown in figures 63 to 68 and 71 to 72 are in accordance with the invention, in this case applied to hinges;
Figures 74 and 75 represent another embodiment of an attachment element of a piece of furniture according to the invention;
Figure 76 represents another attachment element of a piece of furniture according to the invention;
Figure 77, at a larger scale, represents the part indicated by F77 in figure 76;
Figure 78 represents the attachment element of figures 76 and 77 in use;
Figures 79 and 80 represent another two particular embodiments of attachment techniques of a piece of furniture according to the invention;
Figures 81 to 83 represent another attachment technique of a piece of furniture according to the invention;
Figure 84 represents another particular embodiment of an attachment element of a piece of furniture according to the invention;
Figures 85 and 86 illustrate how a part of an attachment element can be fixedly provided on a fitting element;
Figures 87 to 89 represent another particular embodiment of an attachment element;
Figure 90 schematically represents a piece of furniture;
Figures 91 to 97 schematically illustrate a method for realizing openings with collars;
Figures 98 and 99 represent two cutting tools, more particularly drilling elements;
Figure 100 represents a cross-section according to line C-C in figure 99;
Figure 101 represents another attachment element of a piece of furniture according to the invention, with two parts which are depicted in dismounted condition;
Figure 102 represents the attachment element of figure 101 in cross-section, wherein the two parts are mounted in each other;
Figure 103 represents another attachment element of a piece of furniture according to the invention, with two parts which are depicted in dismounted condition;
Figure 104 represents the attachment element of figure 103 in cross-section, wherein the two parts are mounted in each other.

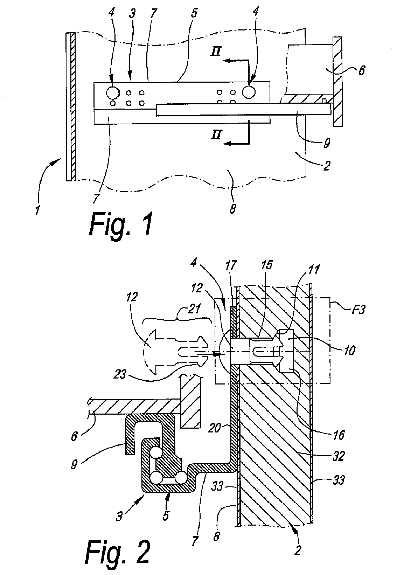

In figure 1, schematically a part of a piece of furniture 1 is represented, which comprises a furniture part 2 and a furniture fitting element 3, wherein the furniture fitting part 3 is connected to the furniture part 2 by attachments 4.

In the example of figure 1, the furniture fitting element 3 consists of a drawer slide, which explicitly is also indicated by reference 5, for slidingly supporting a drawer 6 or possibly another component. The drawer guide 5 consists of a fixed part 7 which is attached to the wall 8 of the furniture part 2, and one or more, in this case respectively one, movable part 9 onto which the actual drawer 6 is attached.

At least one of said attachments 4, in this case both, as illustrated in figures 2 to 6, which figures are not in accordance with the invention, is formed of, on the one hand, an opening 10 in the wall 8 of the furniture part 2 concerned, wherein this opening 10 is provided with at least one collar 11, and, on the other hand, a single-or multi-part attachment element 12, which works in conjunction with the respective furniture fitting element 3, in this case the fixed part 7 thereof, and which can be provided in said opening 10, wherein this attachment element 12 is provided with one or more locking parts 13, in the example two in number, which engage behind the collar 11.

As can be seen in figures 2 to 6, the opening 10 is configured as a local opening or hole, and more particularly as an opening which is open at one side only and thus has a bottom wall 14 at the other side; in other words, an opening in the form of a so-called blind hole.

As represented, the opening 10, including the collar 11, is made in one piece in the wall 8 of the respective furniture part 2, more particularly in the board material of which said wall 8 forms a part. Preferably, it is entirely formed as a cutout, in other words, realized exclusively by one or more cutting operations, for example, drilling and/or milling operations.

Globally seen, the opening 10 is realized as a shaft 15 and a widened portion 16, wherein said collar 11 is formed by the transition between the shaft 15 and the widened portion 16.

In the example, both the shaft 15 and the widened portion 16 are made cylindrical, such that the collar 11 is cylindrical, too.

Seen in cross-section, the represented collar shows an inclined course. However, other embodiments are not excluded, which will become clear from further figures.

In the example of figures 2 to 6, the attachment element 12 is made as a plug which works in conjunction with the furniture fitting element 3 and can be pressed home in the opening 10 by means of a snap effect. In this case, the cooperation between such attachment element 12 and the furniture fitting element 3 is performed in that the attachment element 12 is provided in the furniture fitting element 3 through an opening 17, wherein, by means of a stop-forming portion 18, in this case in the form of the rear side of a cylindrical head 19, the attachment element 12 comes to rest against the furniture fitting element 12, in this case against a flange 20 of the profile of which the fixed part 7 is formed.

The attachment element 12 comprises an attachment part 21 which is provided with said locking parts 13. In the represented example, the locking parts 13 consist of hook-shaped parts which are radially elastically displaceable, in such a manner that they will provide, when being provided in the opening 10, for the snap action and engagement behind the collar 11 due to their own elasticity. To this aim, the locking parts 3 are provided on the ends of elastically bendable lips or legs 22.

Further, this example also shows that the locking parts 13 can comprise inclined locking surfaces 23, by which the locking parts 13 can engage smoothly behind the collar 11. Possibly, however, not necessarily, the direction of the inclined locking surfaces 23 of the locking parts coincides with the direction of the surface of the collar 11.

Further, it is preferred that the attachment element comprises guiding means which allow a smooth insertion of the attachment part 21 through the opening 17 and in the opening 10, which in the example are formed by inclined-running guides 24 at the front ends of the locking parts 13.

As also represented, the whole preferably is provided with centering contact parts, in this case centering seats formed by the exterior side of a cylindrical contact part 25 of the attachment element 12 and the interior sides 26 and 27 of the openings 17 and 10. These centering contact parts provide for that the furniture fitting element 3 has no possibility to move or almost no possibility to move in the plane of the wall.

The attachment of the fitting element to the wall simply is performed, as represented in figure 2, by putting the attachment element 12 through the opening 17 and then inserting it into the opening 10, until the locking parts 13 engage behind the collar 11.

As mentioned in the introduction, an attachment in general can be understood such that the furniture fitting element and/or the attachment element comprises means allowing pre-mounting the attachment element on the furniture fitting element. According to a first possibility, such means can be configured such that the attachment element is retained in or on the fitting element, on or close to the correct location thereof, however, not necessarily already in the final position, with the advantage that the assembler automatically has the attachment element at hand during mounting. According to a second possibility, these means are configured such that the attachment element, by means of the pre-assembly, also is oriented such that it is situated fixed in its final position in respect to the fitting element, which offers the additional advantage that the assembler simply can take the furniture fitting element into his hand and can press it with the attachment element into the opening, without having to perform other manipulations as such at the attachment element itself.

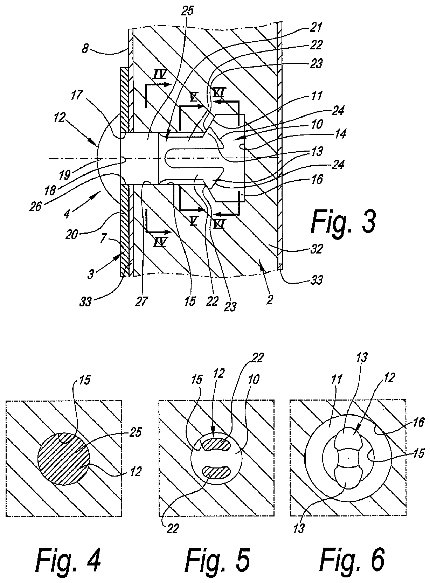

The example of figures 2 and 3 can be regarded as an example of the first possibility, as the attachment element 12, if desired, can be pushed through the opening 17 into the fixed part 7 in advance and then as such cannot drop out of the opening 17 anymore, due to the fact that the locking parts 13, as well as the head 19, prevent that the attachment element 12 can drop freely from the opening 17, as they have a larger crosswise width than the diameter of the opening 17.

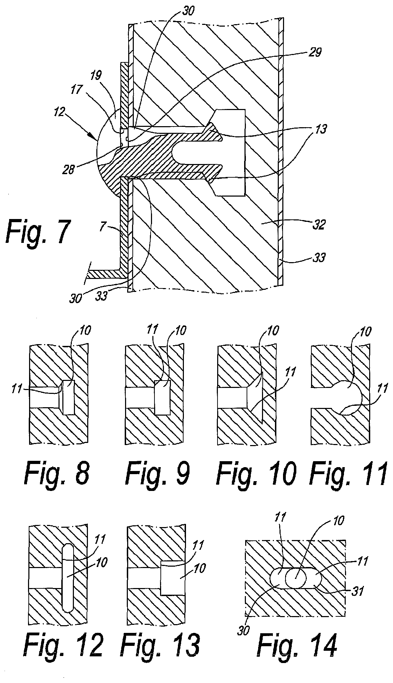

In figure 7, which is not in accordance with the invention, an embodiment according to said second possibility is represented, wherein, for retaining the attachment element 12 in its final position, in this case blocking means are provided in the form of edges 28-29 with which the attachment element 12 is retained axially on a fixed location in the opening 17. Herein, the attachment element can be brought into the pre-assembled condition by pushing it through the opening 17 until the head 19 rests against the fixed part 7. During this insertion through the opening 17, the locking parts 3 are successively bent inward and the edge part 30 of the edge 29 is elastically compressed. In the final position, the edge part 30 springs back, by which the attachment element 12 comes to rest firmly on the fixed part 7.

It is clear that a pre-assembly in general can also be performed in any other manner. The means allowing a pre-assembly can be configured such that the pre-assembly can be performed manually, with a minimum of force, or alternatively only by machine or with a tool, wherein then possibly a sturdier pre-assembly can be guaranteed.

Figure 8 schematically represents an opening 10 as such, similar to the one which is applied in figures 2 to 6. However, it is clear that a variety of other forms of openings 10 are possible, such as illustrated, amongst others, in figures 9 to 13. Figures 9 to 12 represent examples of blind holes, whereas figure 13 represents a through-hole, wherein the collar 11 in fact always is situated at a distance from both sidewalls.

Figure 14, in a cross-section similar to that of figure 6, represents that the widened part does not have to be concentric and can be formed, for example, by one or more local lateral recesses, in this example two opposite recesses 30-31, which each form a collar 11.

It is noted that the furniture parts 2 represented in figures 2, 3 and 7 are realized from a board material 32 which, at the outer surfaces, is provided with a covering 33, for example, a melamine layer, foil, layer of paint, print or any other covering. However, it is clear that the furniture part 2 may be of any other composition or construction and may or may not be provided with coverings. The only essential requirement is that the material of the furniture part must allow applying the desired opening 10. Thus, in figures 8 to 14 no specific construction of the furniture part itself is illustrated.

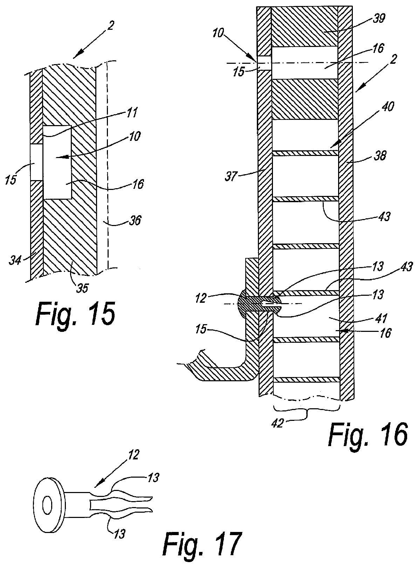

Figure 15 represents a particular construction, wherein the furniture part 2 is composed of different structural layers 34-35-36, wherein then the collar 11 is formed by the rear side of one of these layers, in this case of the layer 34. Such construction offers the advantage that the narrow part or the shaft 15 and the widened portion 16 of the opening 10 can be provided in advance in the board material of which the layers 34-35 are formed, before the layers 34-35 are joined together, for example, by gluing. In such case then no undercut techniques have to be applied, as the required undercut shapes are realized automatically when joining the layers. It is clear that the portions 15-16 of the opening can be local openings as well as openings extending in a longitudinal direction or, thus, grooves. According to a practical example the portion 16 is made as a groove, whereas the portion 15 is formed by a bore hole.

This technique offers particularly practical possibilities with so-called light boards, wherein the core consists of a light material, which then forms, for example, said layer 35, whereas the layer 34 consists of a harder, heavier or sturdier material.

A practical application of the above is the application of this technique in boards with a hollow interior structure, such as furniture panels with a honeycomb core. As represented in figure 16, such furniture panels mostly are composed of outer layers 37-38, with laths 39 provided between the latter and one or more honeycomb core parts 40. As is represented in the upper part of figure 16, said portions 15 and 16 then can be formed in an outer layer 37 and a lath 39, respectively.

In the lower part of figure 16, which is not in accordance with the invention, a particular embodiment is represented, wherein a hollow space 41, which as such is present in the hollow interior structure, is applied for functioning as the widened portion 16. Then, it is sufficient to form a simple bore hole extending up into the hollow interior structure for forming the portion 15. With a honeycomb structure or the like, the bore hole, if desired, can be performed purposefully on such a location that it gives out in a cavity. However, it is noted that the portion 15 can be provided on any desired location in the exterior layer 37, irrespective where this portion gives out in the honeycomb core 42, wherein the configurations of the opening of this portion 15 and of the attachment element 12 are such that always a hooking is obtained. Herein, the attachment element 12 can be provided, for example, with a plurality of separately movable locking parts 13, such that, even when certain locking parts 13 cannot engage actively behind a collar 11 as they are prevented therefrom by a wall 43 of the honeycomb structure, still one or more others of these locking parts 13 provide for an engagement, in such a manner as illustrated in figure 16.

Figure 17, which is not in accordance with the invention, in perspective represents another variant of an attachment element 12.

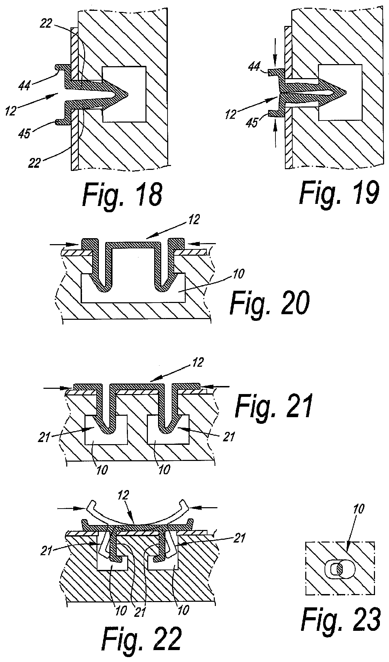

Figure 18, which is not in accordance with the invention, represents an example of a removable attachment element 12, with two legs which are connected to each other exclusively at the front, and with portions 44-45, which, as represented in figure 19, allow unlocking the attachment element by pressing the portions 44-45 towards each other.

Figures 20 to 22, which are not in accordance with the invention, also represent a number of embodiments of detachable attachment elements 12, which can be unlocked by pressing together according to the represented arrows. Figures 21 and 22 also show that one attachment element 12 can have a plurality of attachment parts 21, which cooperate with separate openings 10. The cross-section of figure 23 shows the shape of such opening 10.

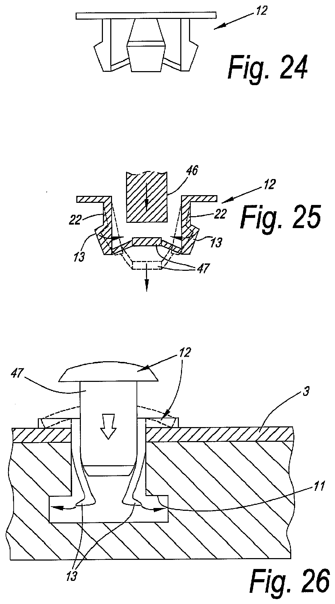

Figures 24 and 25, which are not in accordance with the invention, represent another embodiment, the locking parts 13 of which can be unlocked by means of exerting a pressure force with a pin 46 or the like. Hereby, the portion 47 is displaced and thereby pulls the legs 22 with the locking parts 13 radially inward until an unlocking takes place.

Figure 26 illustrates that an attachment element 12 can also be composed of two parts. This example also illustrates that attachment elements can be applied which do not snap on by themselves but have to be brought into a locking condition by activating means. The activating means herein consist of a plug 47, which is pressed, for example, in a clamping manner between the legs 22 and thereby brings the locking parts 13 up to behind the collar 11.

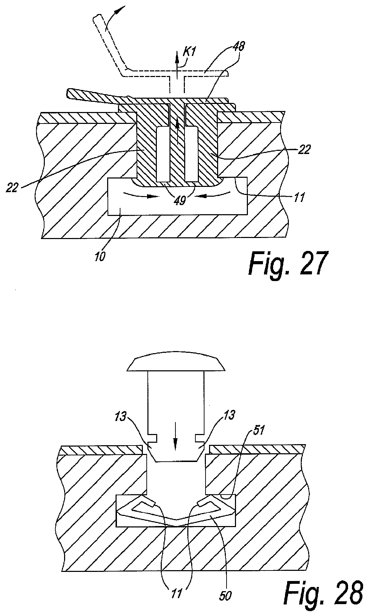

Figure 27, which is not in accordance with the invention, represents an attachment element 12 which, when brought in, snaps on by itself, however, can also be unlocked by means of an extractable part 48. To this aim, the extractable part 48 is connected to the legs 22 via connections 49, which legs, when a pulling force K1 is exerted, are pulled radially inward into an unlocked condition.

In the embodiment of figure 28, which is not in accordance with the invention, the collar 11 is formed by a separate clastic element 50, which in its turn also is seated behind a collar 51. The elasticity required for the snap effect now is offered by the element 50, whereas the locking parts 13 are made rigid.

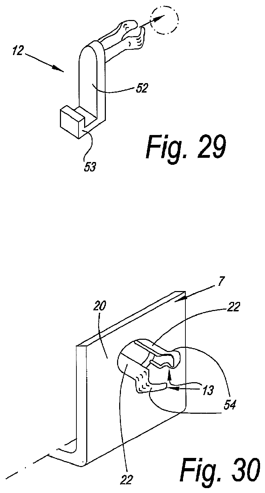

Figure 29, which is not in accordance with the invention, represents that the attachment element 12 does not necessarily have to consist exclusively substantially of a plug-shaped element. It may also comprise, for example, a substantial body 52 with, for example, an attachment part 53, to which then in its turn furniture fittings can be attached.

Figure 30, which is not in accordance with the invention, represents that the attachment element 12 can be made in one piece with furniture fittings, in this case with the flange 20 of the aforementioned fixed part 7, in that, for example, metal lips 22 are outwardly punched out of the material, which function as attachment element, in which also locking parts 13 are formed by means of deformations 54.

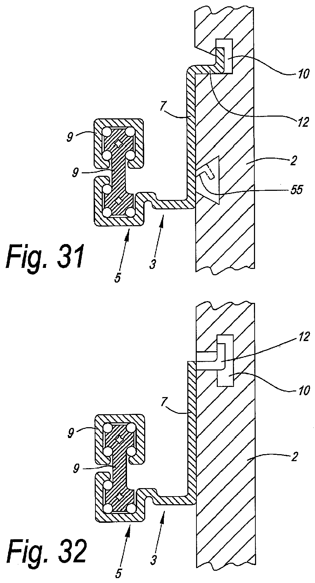

Figure 31, which is not in accordance with the invention, represents an example, wherein the attachment element 12 is configured as a part which can be hung in or hooked in, which engages behind the collar 11. In the example, this relates to an attachment of a fixed part 7 of a drawer guide 5, wherein the opening 10 is configured as a groove, whereas the attachment element 12 is configured as a hook-shaped profile edge. In dashed line, it is represented that such hook-in part can be combined with additional parts 55 which provide for a locking in the final position.

In figure 32, which is not in accordance with the invention, a variant is represented wherein the attachment element 12 consists of a local lip which engages, for example, in a local opening 10.

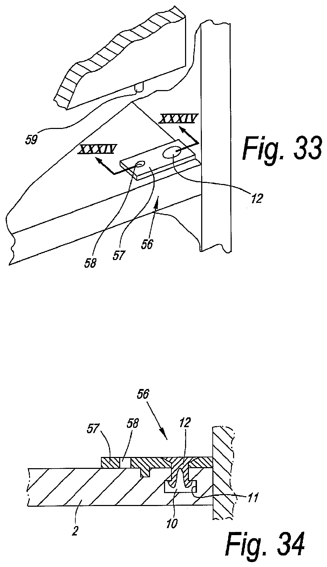

Figures 33 and 34, which are not in accordance with the invention, illustrate how a component of a hinge 56, in this case a plate 57 with an opening 58 for receiving a hinge pin 59, can be attached to a furniture part.

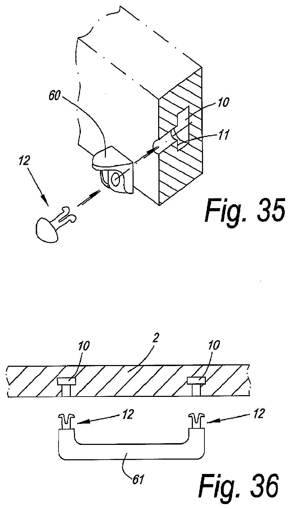

Figure 35, which is not in accordance with the invention, represents an application wherein a carrier or support 60 for a shelf is attached to a wall.

Figure 36, which is not in accordance with the invention, represents an application wherein a handle 61 is attached to a furniture part 2.

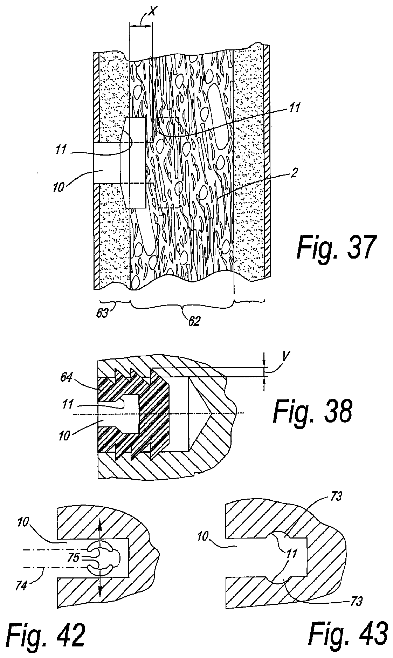

Figure 37 represents an embodiment wherein the wall forms part of a particle board which comprises at least two layers of particle material, a first layer 62 which substantially is present in the core of the particle board, and a second layer 63 which is present close to the wall, respectively, wherein the second layer 63 consists of on average finer particle material than the first layer; and wherein said collar 11 substantially is manufactured of the finer particle material and even the surface itself of the collar also is formed in the finer particle material. In this manner, a sturdy and smooth collar 11 is obtained, by which a stable and safe engagement of an attachment element can be guaranteed.

According to an alternative, the collar, more particularly the beginning thereof, is situated in the layer 62, however, still at a minor distance X from the average transition of the layers which is less than 3 mm, such that the possible deformation in the collar remains limited when considerable pulling forces would occur thereon. Such alternative is represented in dashed line.

It is clear that the presence of the collar on another location in the particle material is not excluded by the invention.

Figure 38 represents a variant wherein the opening 10 and the collar 11 are formed in a separate part 64, in this case a body, which in its turn is attached in a fixed manner in a recess 65 in the furniture part. "In a fixed manner" means that the body, as represented, sits clamped in the surrounding material by a deformation V or is attached in any other manner, such as, for example, by gluing. A simple clamping-in without considerable deformation in the surrounding material herein is not considered "in a fixed manner".

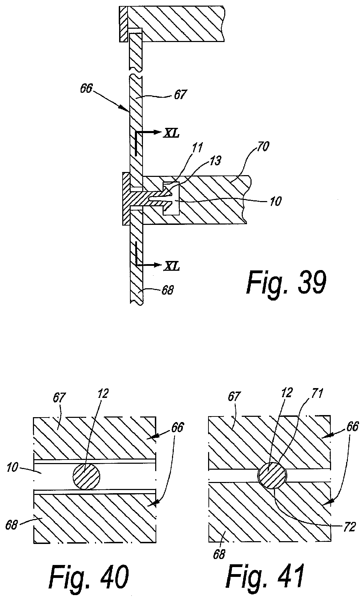

In figure 39, which is not in accordance with the invention, a deviating application is represented with the particularity that the use of an attachment element 12 with locking parts 13 which work in conjunction with a collar 11 of an opening 10, is applied for attaching a furniture back 66 instead of attaching furniture fittings. The particularity herein is that the back, which here consists of two panels 67-68, by applying attachments is retained against a furniture part, in this case the rear side 69 of a shelf 70.

Figure 40 shows how the attachment element 12 fits between the two panels 67-68. Figure 40 also represents that the opening 10 can consist of a groove. Alternatively, use can also be made of one or more local openings.

Figure 41 represents a variant, wherein the attachment element 12 also works in conjunction with recesses 71-72 in the panels 67-68, by which a mutual shifting among the panels is prevented. Herein, it is also preferred that, as depicted, the attachment element 12 then works in conjunction with a local opening 10, such as a bore hole, such that the attachment element 12 cannot shift laterally. In this manner, the panels 67-68 are not only locked against mutual lateral movements in mutual respect, but also in respect to the shelf, which contributes to the stability of the piece of furniture, certainly in applications in which the back at the circumference is seated in grooves only, without other attachment means.

The herein-above described technique is particularly useful for backs and furniture such as described in the Belgian patent application BE 2011/0189 and preferably will be applied in combination with such backs. It is noted that the attachment element can also comprise a clamping part which, in mounted condition, allows tensioning the panels 67-68 towards the outside. Such attachment element can be applied between panels which, seen from the rear side of the piece of furniture, are arranged on top of each other as well as next to each other. A simple attachment is possible, too; thus not with two panels at a time, wherein the attachment element is not provided along the exterior side of the edge of a back panel, but simply through a bore hole in the back panel.

In figures 42 and 43, schematically an example and technique are represented wherein the opening 10 partially is formed by pressing-in or pressing-away material, wherein the portion 73, formed by pressing-away, forms the collar 11. Figure 42 represents how, after a bore hole has been realized, a tool 74 having a radially expandable portion 75 is brought into the bore hole, after which by means of this portion a pressing-in, according to the arrows, is realized in the surrounding material, which results in the result of figure 43.

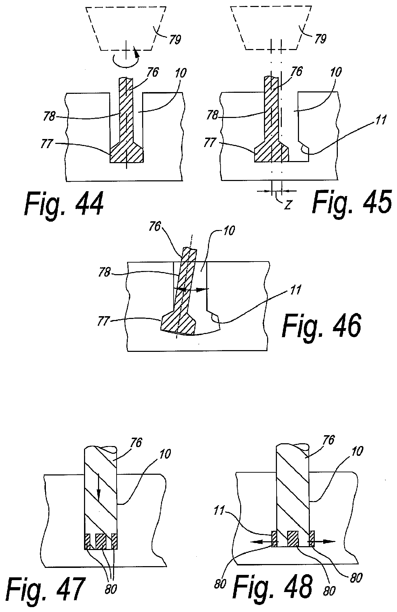

Figures 44 to 48 relate to techniques for realizing an opening 10, which is provided with a collar 11, in a furniture part by means of a rotating cutting tool 76, which, amongst others, offers the advantage that the realization of such openings can be realized without too extensively intervening adaptations in a drilling station, more particularly drilling line of a furniture production process.

According to the example of figures 44-45 as well as in the example of figure 46, a rotating cutting tool 76 is applied with a cutting part 77 defining a well-defined cutting diameter, wherein this cutting part is driven via a shank 78 having a smaller diameter than said cutting diameter, wherein the undercut part of the opening then is formed by laterally displacing the cutting part 77 via a displacement of the shank.

According to figure 44, the rotating cutting part 77 first is moved axially in the furniture part. Then, the rotating cutting tool 76 is displaced laterally over a distance Z for forming the collar. In the figure, the lateral displacement can be performed to the left and right hand sides for realizing two opposed undercuts. Alternatively, the lateral displacement can also be combined with an eccentric rotation of the cutting tool rotating as such, such that a circular undercut is obtained. Both rotary motions can be realized by means of a special controllable drill head 79, by which only a classical drill head must be replaced by such special drill head.

According to figure 46, the lateral displacement is realized by a tilting motion. This can also be performed in one or more directions or can be performed as an eccentric rotary motion.

In figures 47 and 48 a technique is represented in a schematic manner, according to which technique a rotating cutting tool 76 is moved axially in the wall, as in figure 47, wherein this cutting tool is provided with one or more cutting parts 80, which can be moved radially outward, for forming undercut portions and which for this purpose are moved radially outward, as illustrated in figure 48.

The one or more outwardly movable cutting parts 80 can be of any kind. According to a first possibility, these are outwardly movable blades, the movement of which is controlled via an activating element, such as a pin or transmission extending through the axial part of the cutting tool. According to a second possibility, these are blades which come outward by the engagement with the surrounding wall and/or the centrifugal force, wherein they arc actuated, for example, by switching the direction of rotation. With the axial displacement then an ordinary drilling or milling operation is provided, whereas, when having arrived at the bottom, the direction of rotation is reverted and the blades move outward for realizing the undercut. According to a third possibility, a cutting wire or cutting pin is pushed radially outward for forming an undercut. Other possibilities are not excluded.

An attachment element according to the invention consists, on the one hand, of one or more first parts which comprise one or more locking parts which are intended for engaging behind a collar, as well as one or more, whether or not separate, second parts in the form of activating means for activating the locking parts and/or holding them in their locked position. Preferably, herein use is made of a first part with one or more locking parts which can be radially displaced and thereby can engage behind the collar or collars, and a second part, which preferably can be activated from outside and which allows displacing the radially displaceable locking parts into their final locking position and/or allows holding the one or more locking parts in a locked condition. More particularly, it is preferred that the locking parts consist of one or more elastically bendable lips which each are provided with one or more hook-shaped parts, whereas the second part is realized as a plug-shaped part which can be slid into the first part.

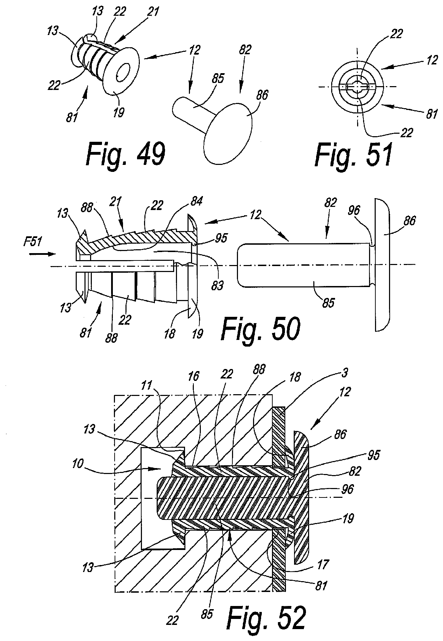

An example thereof is already described herein above by means of figure 26. Another example is described below with reference to figures 49 to 52.

Herein, the attachment element 12, as aforementioned, consists of a first part 81 and a second part 82. The first part 81 comprises an attachment part 21 with two, in this case elastically bendable or movable lips or legs 22, which are provided with locking parts 13 in the form of hook-shaped portions. Between the legs 22, an opening 83 is formed which forms a seat for the second part 82. The insides 84 of the legs 22 are curved inwards towards the free extremities thereof, at least in the free condition thereof. Further, the first part 81 comprises a stop-forming portion 18 in the form of the rear side of a head 19. The opening 83 extends through the head 19.

The second part 82 comprises a plug-shaped element 85, which fits into the opening 83, and a stop-forming portion 86 in the form of a head.

The use and operation can simply be deduced from figure 52. First, the first part 81 is inserted through an opening 17 in the furniture fitting element 3 and is provided in the opening 10. Herein, the hook-shaped locking parts 3 are bent inward, such as in figure 50, such that they fit freely or almost freely through the shaft 16. By then pressing the plug-shaped element 85 into the opening, a condition as in figure 52 is obtained, whereby a locking is achieved.

According to a particular embodiment, the piece of furniture comprises furniture fittings with attachment parts of different thickness, whereas attachment elements are applied which in fact are identical in respect to dimensions and shape, for which purpose openings with collars on a different depth are applied. With the attachment parts of different thickness, this may relate to attachment parts which form part of one and the same furniture fitting element, as well as to attachment parts of different kinds of furniture fittings which are applied in the same piece of furniture. This offers the advantage that always the same attachment elements can be used. This allows that different kinds of furniture fitting elements which are present in a piece of furniture all can be attached by means of the same attachment elements.

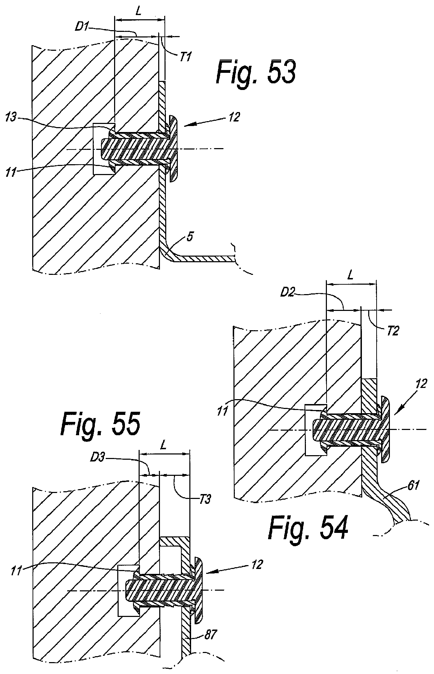

The above is illustrated in figures 53 to 54, wherein in figure 53 a drawer guide 5 is attached to a wall, in figure 54 a handle 61 is provided at a wall and in figure 55 a flange or plate 87 of a hinge is attached to a wall, each time with attachment parts of different thickness, T1, T2 and T3, respectively, whereas the indicated length L of the first part 81 each time is equally large and the differences in thickness are counterbalanced by realizing the collar 11 each time at a different depth, D1, D2 and D3, respectively.

Generally, it can be stated that the use of locking parts 13 which provide for an engagement behind a collar 11 formed in advance does not exclude that still other means are provided which contribute to a better attachment. So, for example, clamping edges can be provided as additional means, such as, for example, the barb-shaped toothing 88 in the examples of figures 49 to 60 described herein above as well as below.

According to another generally applicable characteristic, the attachment element 12, in combination with the opening 10 and collar 11, is configured such that a furniture fitting element attached with it is tensioned with a tensioning force against the respective furniture part. This can be realized in different ways, which may or may not be combined with each other. According to a first possibility, the locking parts are configured such that, in mounted condition, they press against the collar 11 with a clamping fit. According to a second possibility, the stop-forming portion 18 or head is realized as an elastically deformable flange, such as depicted, for example, in the example of figure 52, wherein the dimensions of the respective components then further are chosen such that, in mounted condition, this flange provides in a tensioning by bending.

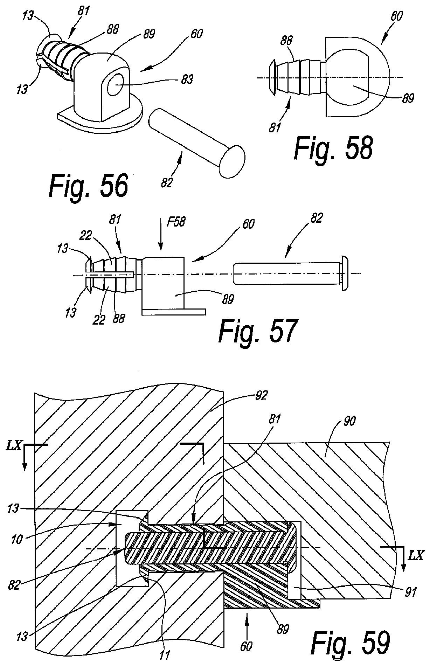

According to a characteristic, which can be realized in different examples, the attachment element, or a part thereof, is pre-assembled on the respective furniture fitting element and/or is made in one piece therewith. An example thereof is represented in figures 56 to 60, wherein the furniture fitting element consists of a support 60 for a shelf.

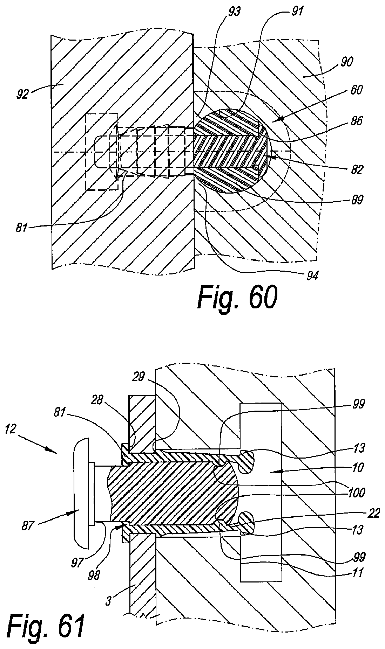

Herein, the first part 81 and the second part 82 are made analogous to the parts 81 and 82 of the example of figures 49 to 52, with the difference that the first part 81 is made in one piece with a body 89 of a support 60 for a shelf 90, wherein the opening 83 now also continues through said body 89. The operation and assembly can simply be deduced from figures 59 and 60. As can be seen in figures 59 and 60, the support 60 can be provided with the first part 81 in an opening 10. By then providing the second part 82, the locking parts 13 engage behind the collar 11. Subsequently, the shelf 90, which is provided with a recess 91 at the bottom side on each location where a support 60 has to be provided, can be put down on the respective supports, in such a manner that the bodies 89 become seated in the recesses 91.

According to a particular embodiment, for which the embodiment of figures 59 and 60 forms an example, a support 60 for a shelf 90 is provided, which comprises connecting means providing for a positive connection between the shelf 90 and the associated sidewall 92 or the like. By a positive connection is meant that a well-defined hooking-in is provided at the shelf as well as at the sidewall and that the attachment is not exclusively based on friction and clamping or exclusively on a pressing-in of corrugated surfaces in a smooth bore hole wall.

In the example of figures 59 and 60, such positive connection is obtained, on the one hand, in that the support 60 becomes seated with the hook-shaped locking parts 13 behind the collar 11, and, on the other hand, in that the support 60 is fixedly seated in the recess 91 in a form-bound manner, more particularly in that the body 89 is retained behind the surrounding material portions 93-94.

Further, it is noted that in embodiments comprising activating means, such as the second part 82, according to the invention, these embodiments comprise means for retaining the activating means, more particularly the parts applied thereby, in an active position. This is can be achieved in different manners; for example, as follows:
- by clamping, for example, in that the plug-shaped element 85 is clamped into the opening 83 in a sufficiently fixed manner;
- by applying mutually cooperating locking parts which, for example, fit or snap behind each other or into each other, such as the edge or rib 95, which cooperates with the seat 96, in the embodiments of figures 49 to 55;
- by configuration with other parts, such that after completed assembly the second part 82 cannot leave the first part 81 anymore; figures 59 and 60 represent an example thereof in that the head functioning as a stop-forming portion 86 finally is sitting trapped in the recess 91 and it becomes impossible that the part 82, after the shelf has been placed, can slide out of the first part.

It is also noted that in embodiments comprising a first part with locking parts and at least a second part for activating the locking parts, such as said first part 81 and second part 82, these parts possibly can be provided at each other, either for the sake of user-friendliness or for preventing that one of the parts gets lost. This preferably will be realized according to any of the following possibilities:
- the parts are attached to each other, for example, via a supple connection, such as a synthetic material string;
- they are made in one piece, for example, in that they are connected to each other via a flexible part and are formed in one piece in a mold;
- they are mounted at each other, preferably in a locking manner, for example, such as represented herein below by means of figure 61.

Herein, initially they can be provided at each other in a mutual position which still has to be activated. Also, retention means can be provided which, when pressing the whole into the opening 10, prevent the initial pressing-apart of the legs, after which the second part will become operational only when the first part is completely present in the opening 10.

In figure 61, another variant is represented, wherein the first part 81 is pre-mounted on a furniture fitting element 3 via a seat with edges 28-29. The second part 82 is retained at the first part 81 by means of locking parts, the edges 97-98 forming part of the latter. The cooperating edges 99-100 function as retention means, such that the second part 82 can be pressed further into the first part 81 only after a certain force has been overcome.

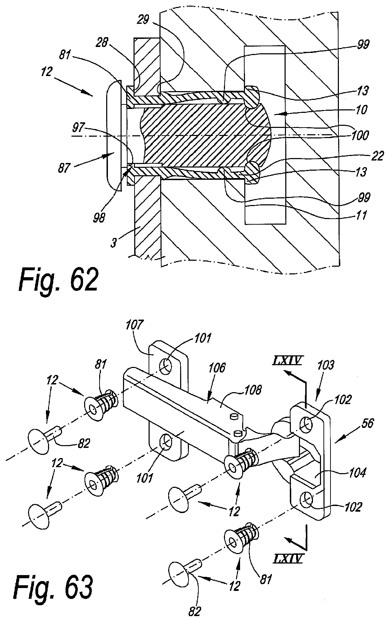

In figure 62, the variant of figure 61 is represented in mounted condition.

It is noted that in embodiments which make use of elastically bendable lips, such as the lips 22, such lips can vary in number at manufacturer's option and possibly in function of the desired characteristics. In the examples of figures 49 to 61 each time two opposite lips 22 are applied, however, according to a variant this may also be three, four, five or more legs which are arranged along the circumference. With a small number of legs, these preferably are made stiffer than in the case that more legs are applied. Also in embodiments with a larger diameter, preferably more legs are applied than in embodiments with a smaller diameter.

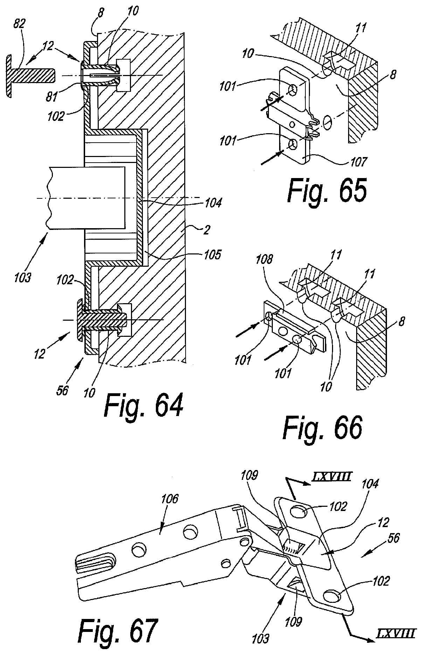

In figures 63 and 64 is represented how a usual hinge can be mounted screwlessly on the wall 8 of furniture parts by means of attachment elements 12. In all attachment holes 101-102 now attachment elements 12 are provided, which engage in openings 10 with collars 11 which are provided for this purpose. In the example, the attachment elements 12 are of a form as illustrated in figures 49 to 50, wherein use is made of a first part 81 and a second part 82, in accordance with the invention.

In the example, a hinge 56 is represented which, at one hinge part 103, comprises a pot-shaped part 104, which is intended for working in conjunction with a recess 105 in a cabinet door or the like, with on opposite sides thereof an attachment hole 102 respectively, and which, on the other hinge part 106, comprises a cross plate 107 provided with the necessary attachment holes 101. The cross plate 107 as such is illustrated in figure 65, together with the openings 10. However, it is clear that the attachment technique can be applied to a variety of hinges, for example, also to hinges wherein a straight plate 108 is used instead of a cross plate 107, as illustrated in figure 66. With a straight plate, the attachment means 12, which have to be provided according to the represented arrows, after mounting can easily be hidden from view by mounting the body 108 of the hinge part 106 on top of it.

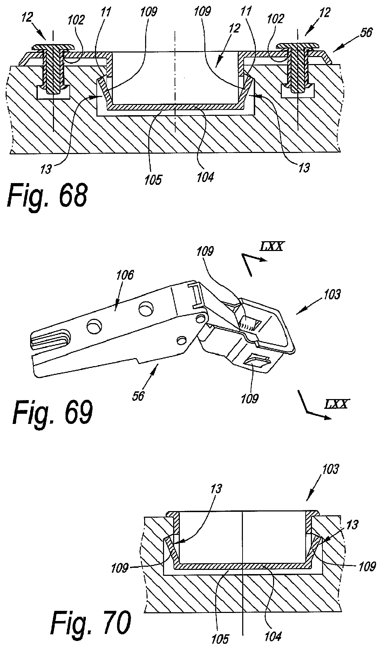

Figures 67 and 68 represent a furniture fitting element, in this case also a hinge 56, which comprises a pot-shaped part 104, which, as known, is intended for being provided in a recess 105. The particularity herein consists in that the actual pot-shaped part 104, whether or not by means of additional components, functions as an attachment element 12 working in conjunction with one or more collars 11 which then are provided in the recess 105. To this aim, the pot-shaped part 104 comprises one or more, in this case two, locking parts 13 which can engage behind the collar or collars 11. In figures 67 and 68, those consist of elastically bendable lips 109, which preferably engage behind the collar 11 as barbs. As represented, these locking parts can be made in one piece with the pot-shaped part, for example, in the form of lips punched out of the wall of the pot-shaped part 104.

In figure 68, such self-locking pot-shaped part 104 is combined with additional locking elements 12 working in conjunction with attachment holes 102, in this case on opposite sides of the pot-shaped part. However, it is clear that such additional locking parts 12 are not strictly necessary. Thus, in figures 69 and 70, which are not in accordance with the invention, a variant is represented wherein the attachment at the height of the pot-shaped part 104, in other words, the attachment of the hinge part 103, is performed exclusively via locking parts on the pot-shaped part itself.

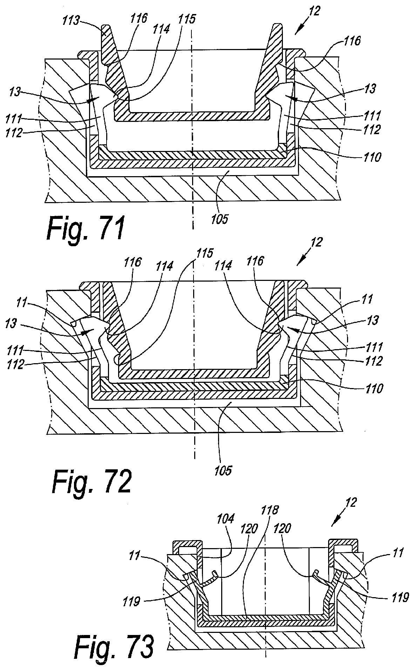

In figures 71 and 72, an example is represented wherein the pot-shaped part 104 comprises additional components for realizing the locking. The attachment element 12 then is formed by the actual pot-shaped part 104, a first additional component 110 with locking parts 103 in the form of elastically bendable lips 111 which fit through openings 112 in the wall of the pot-shaped part 104 and can be forced to behind the collar 11, as well as a second additional component 113, which acts as an activating means for bringing the lips 111 from a not-locking condition into a locking condition. This second component 113 herein consists of a plug-shaped element which can be forced between the lips 111, with a sidewall which presses the lips open in a suitable manner.

Further, locking means can be provided for retaining the components 110 and 113 in the non-activated condition in the pot-shaped part 104. In the example, as can be seen in figure 71, those are formed by mutually engaging parts 114 and 115 and by the fact that the lips 111 therein already are partially seated in the openings 112.

Further, also locking means are provided which mutually lock the parts 110 and 113 in the activated condition of the locking parts 13, which in the example are formed by portions hooking into each other, in this case, on the one hand, the already mentioned parts 114, which then cooperate with the parts 116.

The operation of the attachment 12 can simply be deduced from figures 71 and 72. By bringing the component parts into a condition as in figure 71, a pre-assembled condition is obtained which possibly can be realized at the factory. By bringing the pot-shaped part 104 into the recess 105, the condition of figure 71 is obtained. By then pressing on the second additional component 113 in the pot-shaped part 104, the condition of figure 72 is obtained, wherein the locking parts 113 engage underneath the respective collars 11 and the pot-shaped part 104 is locked in the recess 105.

It is noted that the lips 111 preferably are provided only locally, for example, in the form of two lips 111 situated diametrically opposite each other, which are connected to each other via the bottom part of the component 110, whereas the second additional component 113 can have a cylindrical shape. It is also noted that the components 110 and 113 preferably are made of synthetic material, although the use of other materials, such as metal, is not excluded.

In figure 73, which is not in accordance with the invention, a variant is represented, wherein, apart from the pot-shaped part 104, use is made of only one additional component 118 with locking parts 13, in this case in the form of a part with lips 119 which spring outward in an elastic manner, which engage behind the collar 11 due to their own elasticity. An unlocking is possible by bending the lips back inward, for example, by means of lips 120 which, possibly by the use of a tool, can be forced towards each other.

It is clear that the component 118, too, can be made of any suitable material, for example, of a suitable material or of a suitable synthetic material. Suitable materials and the required wall thicknesses thereof can be experimentally determined by those skilled in the art.

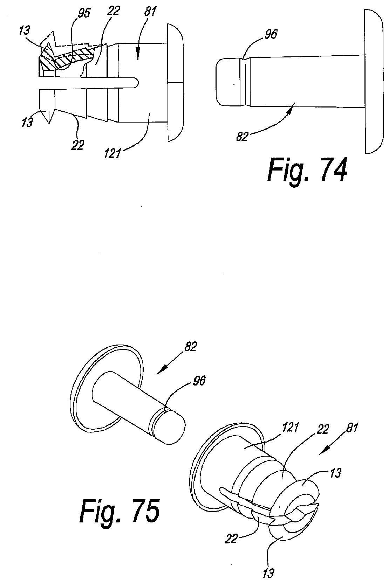

Figures 74 and 75 represent another variant of the example of figures 49 to 50. A fundamental difference is that the seat 96 now is situated at the front extremity of the second part 82 and in the locked condition works in conjunction with the represented edge 95. Another difference is that the first part 81 has a smooth wall part 121 up to at least there, where the lips 22 begin; by which the first part 81 can be unmolded more easily than in the case that it is formed in an injection mold.

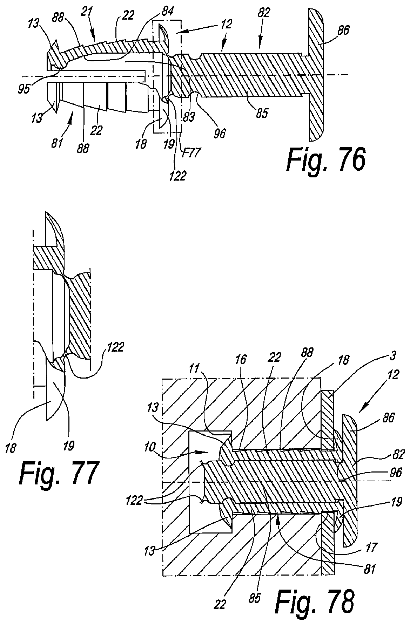

Figures 76 to 78 represent an example in which the first part 81 and the second part 82 initially are connected to each other, by which they remain next to each other at least beforehand. Herein, they are connected via a material connection which can be broken, for example, by being formed in one piece in a mold, wherein the connection consists of a thin breakable part 122, either in the form of one or more lips, or in the form of a thin fleece extending along the circumference.

When applying the attachment element 12 of figures 76 to 78, this attachment element 12 is brought with the first part 81 through the opening 17 and into the opening 10, after which the second part 82 is axially pressed home in the first part 81 until a locking condition, as illustrated in figure 78, is obtained. Herein, the breakable portion 11 breaks or tears. In the final position, the second part 82 is retained in the first part 81 by the cooperation between the edge 95 and the seat 96.

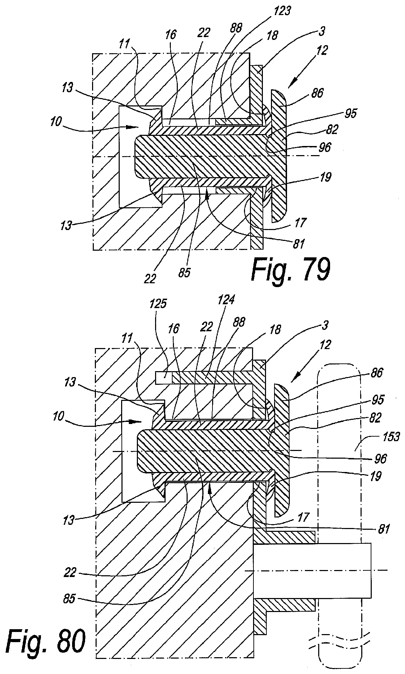

In figures 79 and 80, two examples are represented wherein the attachment provides for one or more centering parts and/or support-offering parts, which are additionally formed at the furniture fitting element 3, which work in conjunction with openings in the furniture part concerned. In figure 79, the part 123 additionally formed thereon consists of a cylindrical sleeve-shaped collar which also fits into the opening 10. In figure 80, for this purpose use is made of a part 124 protruding from the wall of the furniture fitting element 3 and having the form of a cylindrical pen, which fits into an opening 125 provided especially to this aim.

The parts 123 and 124 preferably are made in one piece with the furniture fitting element 3 or are at least connected thereto in a stable fixed manner. They offer the advantage that thereby large forces can be transferred from the furniture fitting element 3 to the furniture part 2, without the actual attachments 4, more particularly the attachment elements 12, having to counteract these loads. The attachment elements 12 then substantially have the function to prevent that the parts 123 and 124, together with the furniture fitting element 3, might slide out of the openings concerned.

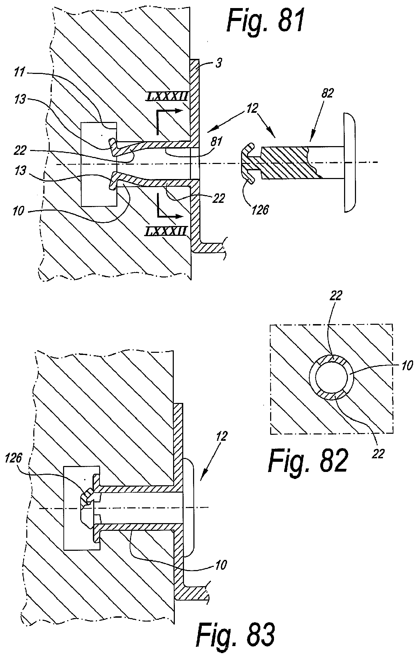

In figures 81 and 82 the attachment element 12 consists at least of a first part 81 and a second part 82, and the first part 81 is made in one piece with the furniture fitting element 3. In this example, this is realized in that the first part 81 consists of lips 22, which are formed in one piece on the furniture fitting element 3 and which are provided with the necessary locking parts 13. Also in the example, the second part 82 consists of a separate part, in the form of a plug-shaped element, with locking means 126.

By pressing the second part 82 into the first part 81, a locked condition is obtained, as illustrated in figure 83. Herein, the plug-shaped body of the second part 82 presses the lips 22 outward, such that the locking parts 13 engage positively behind the collar 11. The locking means 126 provide for that the second part 82 is retained in the first part 81. However, by applying a certain force, the parts 82 and 81 can be removed from the opening 10.

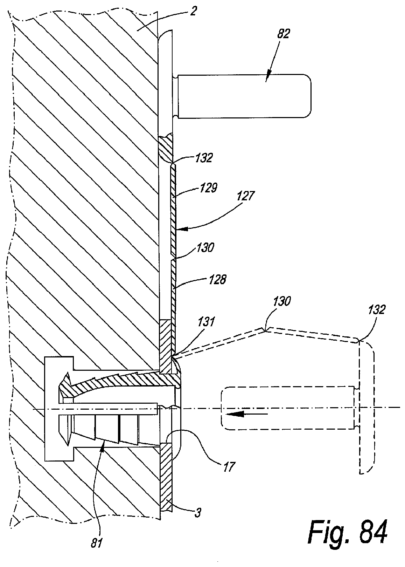

In figure 84, the first and the second part are connected to each other, such by means of a connection part 127 which can be folded and/or buckled. In the example, to this aim use is made of a lip with two lip parts 128-129, which, via film hinges 130-131-132, are coupled to each other and also to the first part 81 and the second part 82, respectively, such that the second part 82, as represented in dashed line, can be brought up to in front of the first part 81 in order to be then pressed home therein.

Possibly, the lip parts 128-129 and the film hinges 130-131-132 initially may show a certain stiffness, by which the two parts 81-82 are held in a mutual position determined in advance, for example, as illustrated in solid line in figure 84, whereas during folding then a bend is created in the film hinges 130-131-132.

As represented in figure 84, the first part 81 can be provided pre-assembled on a furniture fitting element 3, for example, in that it is fixedly snapped into the opening 17, while the second part 82 is attached thereto and preferably is in a position as illustrated in figure 84. In this manner, the furniture fitting element 3, with both parts 80-81 attached thereto, is simple to market.

It is also noted that the lip portions 128 and 129, in mounted condition, are situated parallel to the wall of the furniture part 2, wherein they are folded tight against each other, with the advantage that they do not hamper the use of the fitting.

Alternatively, the film hinges 131 and 132 can be omitted, wherein then instead thereof use is made of the normal thickness of the respective lip parts.

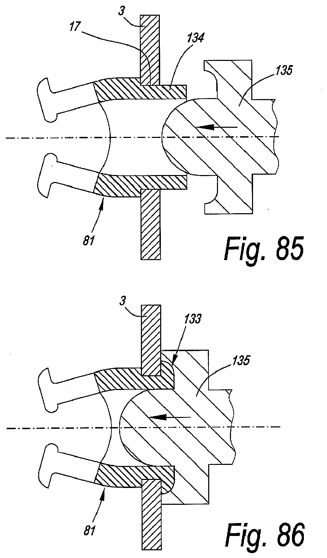

In figures 85 and 86 is represented how a first part 81 of an attachment element 12 can be pre-mounted on a furniture fitting element 3 by means of a welding connection 133. Herein, the first part 81 is presented with a collar 134 through an opening 17 in the furniture fitting element 3, after which the collar 134 then is deformed by means of a heated punch 135 or the like, such that the first part 81, after cooling down, remains fixed to the edge of the opening 17.

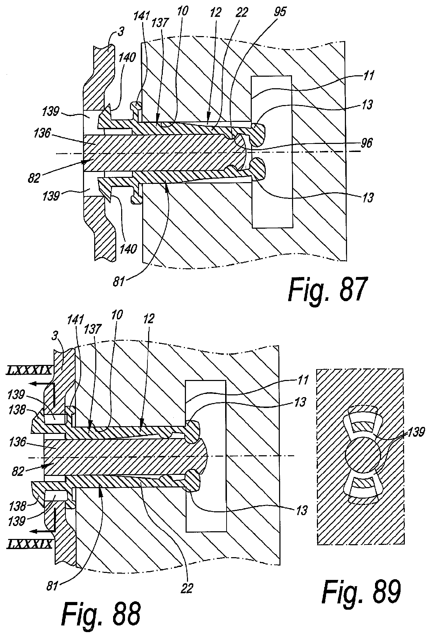

In figures 87 to 89, a further variant is represented, wherein the attachment element 12 is also present as pre-mounted on the furniture fitting element 3. Herein, the attachment element 12 also comprises a first part 81 with locking parts 13, which are intended for working in conjunction with a collar 11 in an opening 10, as well as a second part 82 with a plug-shaped body 136 for bringing the locking parts 13 into a locking condition. In this case, the second part 82 is made as a pin, for example, a metal pin, which is fixedly attached to the furniture fitting element 3 and protrudes from the rear side, whereas the first part 82 is provided on top thereof in a sliding manner. To this aim, the first part 82 comprises a central part 137 which is made as a sleeve, having on the one distal extremity the locking parts 13 which preferably are situated on elastically bendable lips or legs 22, and on the other distal extremity also locking parts 138 which are radially elastically bendable, fit through openings 139 in the wall of a furniture fitting element 3 and can engage with locking surfaces 140 behind the edges of these openings 139. Further, the first part 81 is provided with a stop-forming edge 141 or the like, which can work in conjunction with the wall of a furniture part, as well as with locking parts which can effect a temporal mutual locking between the first part 81 and the second part 82, which locking parts consist of an edge 95 which can work in conjunction with a seat 96.

The functioning of the variant illustrated in figures 87 to 89 can simply be deduced from the figures and substantially consists in that the furniture fitting element 3, starting from an initial condition as illustrated in figure 87, is inserted with the parts 81 and 82 into the opening 10 and simply is pressed home. From the moment that the first part 81 with the stop-forming edge 141 comes into contact with the wall of the furniture part, the displacement of the first part 81 is prevented and the locking between both parts 81 and 82 is interrupted, wherein the second part 82 then is shifted in the first until a locking condition, as in figure 88, is obtained. It is clear that the locking parts 13 herein engage behind the collar 11, whereas the locking parts 138 engage behind the edges of the openings 139. It is also clear that the whole can be unlocked by forcing the locking parts towards each other, in such a manner that the furniture fitting element 3, together with the fixedly attached thereto part 82, can be removed again from the first part 81, such that a disassembly remains possible.

It is clear that the invention shows its benefits best with furniture intended for being assembled by the user himself, wherein two or more furniture parts, in particular furniture panels, thereof and in particular all furniture parts thereof, can be assembled without the necessity of tools. In this manner, it can be obtained that no screw connections or the like are required any more, as it is possible to mount the furniture parts to each other without tools as well as mount the furniture fitting elements 3 to the furniture parts without tools.

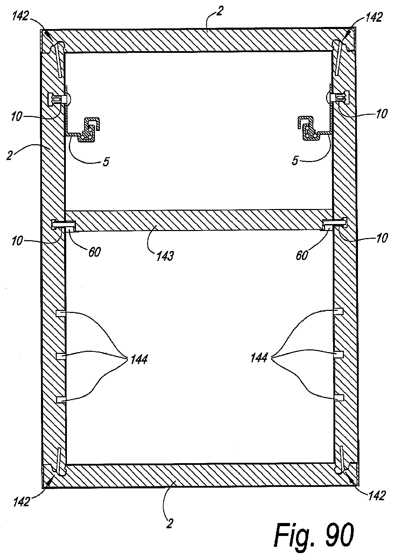

The above is illustrated in figure 90, wherein schematically a piece of furniture is represented wherein the furniture parts 2 situated at the circumference are connected to each other by means of locking profiles 142, whereas the furniture fitting elements 3, in this case the drawer guides 5 and the supports 60 for a connecting intermediate panel 143, have to be mounted in openings 10 with collars 11 by means of the herein-above described attachments. As represented, of course also other classical bore holes 144 can be present in the furniture parts, thus, without collars 11, for example for providing, by means of classical shelf supports, shelves for being loosely supported.

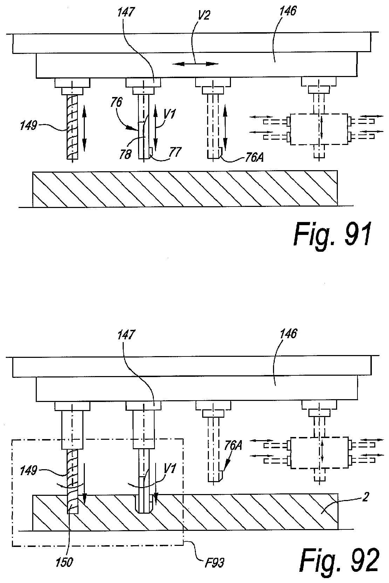

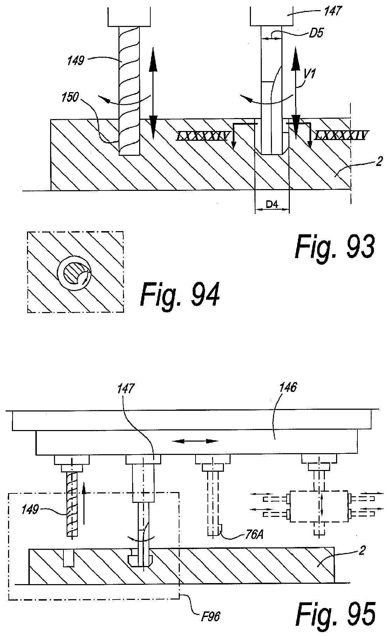

In figures 91 to 97, schematically a possibility is represented for realizing such openings 10, wherein use is made of a rotating cutting tool 76 with a cutting part 77 defining a well-defined diameter D4, wherein this cutting part 77 is driven via a shank 78 having a smaller diameter D5 than said diameter D4, whereby an undercut portion 145 is formed by laterally displacing the cutting part 77 via a displacement of the shank 78. A particular aspect herein consists in that use is made of a drill head 146 with at least one drill spindle 147 which can be axially displaced in respect to the furniture part 2 in order to let the cutting tool 76 penetrate into the furniture part 2, wherein the drill head 146 can also perform a lateral displacement in respect to the furniture part 2, thus, in a plane parallel to the furniture part 2. The axial displacement is indicated schematically by arrow VI, whereas the lateral displacement is indicated schematically by arrow V2. The displacement V2 preferably is at least two-dimensional, such in a plane parallel to the workpiece. By letting the cutting tool 76 penetrate into the surface of the furniture part 2, a condition is obtained as illustrated in figures 92 to 94. By then letting the drill head 146 perform a lateral movement V2, preferably according to small cylindrical path 148, the undercut for forming the collar 11 can be effected, as illustrated in figures 95 to 97. It is clear that for taking the cutting tool 76 out of the furniture part 2 again, the former first has to be brought, via a suitable centering by means of the displacement of the drill head 146, into the middle of the opening 10 in order to be then axially taken out of the opening 10.

The herein above-described technique allows that it can also be applied with a drill head 146 comprising two or more or even a complete series of drill spindles, by which simultaneously a plurality of openings can be effected and various advantageous production techniques become possible. By advantageous production techniques is primarily meant that large numbers of openings can be realized in an efficient manner with economically reasonable production times, amongst which at least one opening which is made with an undercut.

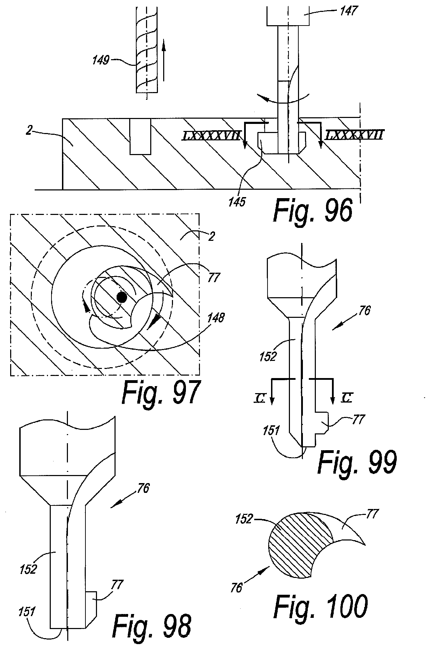

In case that use is made of a plurality of drill spindles, preferably use is made of drill spindles which individually can perform an axial displacement V1. When drill spindles are used which individually can be axially displaced, straight bore holes as well as stepped openings 10 can be formed with one and the same drill head 146 in an advantageous manner. This is also illustrated in figures 91 to 97, wherein during the initial axial displacement V1 also a bore opening 150 is formed by means of a straight drill 149; however, this straight drill 149, as illustrated in figures 95 and 96, is drawn back before said lateral displacement V2 of the drill head 146 is realized. It is clear that the simultaneous application of a cutting tool 76 and a straight drill 149 in the aforementioned manner contributes to shortening the production time. Also, by applying this manner of production, no separate drill heads must be employed.

As represented in figures 91, 92 and 95 in dashed line, it is clear that such drill head 146 can be equipped with other cutting tools, more particularly drilling elements.

According to another important independent aspect, two or more cutting tools 76-76A will be applied on one and the same drill head 146 for forming bore holes 10 with a collar 11. Such second cutting tool 76A is schematically represented in figures 91, 92 and 95. This allows simultaneously realizing a plurality of undercuts, wherein the undercuts for forming the collar 11 are realized by means of one and the same lateral displacement.

It is noted that the displacements V1 and/or V2 in all herein above-described examples can also be realized by having the workpiece perform a displacement, for example, by retaining it on a movable table or holder and controlling the table or holder. Thus, said displacements V1 and V2 have to be interpreted in both ways.

It is also noted that by a drill head the whole is understood on which the one or more spindles are present.

Further, an example of the cutting tool 76 itself substantially consists of a drilling body which, in the proximity of the distal free extremity, is provided with preferably only one locally radially protruding tooth-shaped cutting part. In figure 98, an example thereof is represented, wherein the tooth-shaped cutting part 77 extends towards the axial extremity of the cutting tool 76 up to or approximately up to the distal extremity 151 of the drilling body 152. In figure 99, a variant is represented, wherein the tooth-shaped cutting part 77 is situated at a small distance from the distal extremity 151. Hereby, a prolonged extremity of the drilling body 152 is formed underneath the cutting part 77, whereby during drilling initially a better centering is effected.

In figure 100 it is finally represented how, for example, the locally protruding tooth-shaped cutting part 77 can be configured.

It is noted that such collar 11 does not necessarily have to extend along the entire circumference of an opening 10 and that it can also be locally present, for example, on one or more locations along the circumference. By displacing, for example, the cutting tool 76 not via a cylindrical path but displacing it only shortly to and fro, two collars can be formed which are situated diametrically opposite to each other.

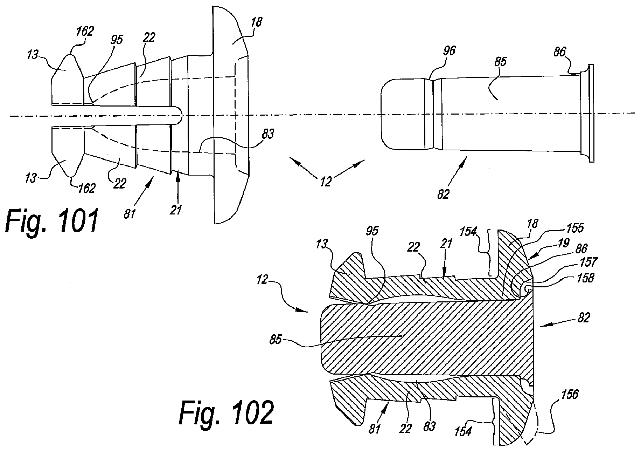

Figures 101 and 102 represent another variant of the example of figures 74 and 75.

The example of figures 101-102 substantially consists of a first part 81 and a second part 82, wherein the first part 81 comprises an attachment portion 21 with activatable locking parts 13, a stop-forming portion 18 and an opening 83, and wherein the second part 82 comprises a plug-shaped element 85, which can be provided in the opening 83 in order to activate the locking parts 13, and also comprises a stop-forming portion 86. Further, the particularity of this example consists in that both parts 81 and 82 are configured such that the stop-forming portion 18 of the first part, with a certain deformation thereof, cannot interfere with the second part 82. Generally, these means preferably consist of a physical separation between, on the one hand, the stop-forming portion 18 or at least the peripheral edge portion 154 thereof, and, on the other hand, the second part 82.

As can be seen in figure 102, according to this example this physical separation is obtained in that the stop-forming portion 86 only makes contact with the center part 155 of the second part 82 and no longer with the peripheral flange-shaped portion 154 of the head 19. Further, this physical separation is rendered more pronounced in that the stop-forming portion 86 is no longer realized as a real head and is restricted in its dimensions, in other words, in that the stop-forming portion 86 in radial direction no longer extends up to the peripheral edge portion 154.

In fact, it is so that a furniture fitting element can deform with certain loads or can tilt somewhat. As a consequence, the stop-forming portion 18 or at least the peripheral portion 154 thereof is deformed and can bend outward, as indicated in dashed line 156. When this bent portion then would come into contact with the stop-forming portion 86, which in fact is possible in the example of figure 52, this may have the consequence that the second part 82 is pressed out of the first part 81 and thus the whole can come off.

From figure 102, it is clear that such bending out has no impact. In fact, the bent portion indicated in dashed line 156 cannot make any contact with the second part 82.

Another important independent aspect which is applied in the example of figures 101 and 102 consists in that the second part 82 with the stop-forming portion 86 is at least partially and preferably entirely countersunk in the first part 81. Hereby, the risk is reduced that the second part 82 is accidentally drawn out of the first part 81. To this aim, a seat 157 is realized in the first part 81. The second part 82 still can be drawn out by means of a collar 158, behind which a small object can be inserted for exerting a tensile force.

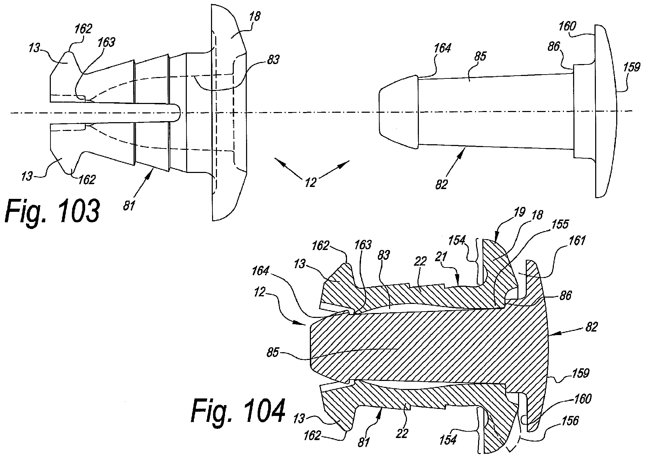

In figures 103 and 104, a variant is represented, wherein the stop-forming portion 86 also makes contact with the central portion 155 of the second part 82 only and no longer with the peripheral flange-shaped edge portion 154 of the head 19. However, now a flange-shaped or head-shaped portion is provided on the second part 82, which forms a pressing-on surface 159 and provides for a collar 160 for drawing out as well. A free space 161 provides for that the the physical separation is maintained.

According to an alternative of said physical separation, the stop-forming portion 18 can be made so sturdy that a deformation is hardly or not possible. In connection therewith, it is noted that in figures 101 to 104 also already a head 19 has been applied which is more robust than, for example, in the example of figure 52, in order to limit the possible deformation in this manner.

According to a particular aspect, which is represented in the examples of figures 101 to 104, the locking parts are provided with rounded portions 162, which allows a smoother mounting and/or dismounting. It is clear that this can also be applied in the other examples.

According to another independent aspect, between the first part 81 and the second part 82 locking parts are present which comprise rather steep locking surfaces, which preferably extend in directions forming an angle of less than 30 degrees and still better of less than 20 degrees with a surface perpendicular to the longitudinal axis of the parts 81 and 82. This is applied in the example of figures 103-104, in which the respective locking surfaces are indicated with references 163 and 164. Hereby, a good locking can be guaranteed.

Generally, it is, however, noted that such locking parts between the first part 81 and the second part 82 can be realized in any form.

It is noted that with examples with two parts, wherein the second part provides for the activation of the locking parts on the first, it is generally preferred that the second part can be provided in the first without tools, preferably via a simple insertion movement.

Generally, the hooking-in of a locking part, more particularly locking part 13, behind the collar 11, will be performed on at least one of the locking parts over a radial distance of at least 0.5 mm and still better at least 1 mm. When a "second part", as aforementioned, is used, this second part preferably shall effect at least a diagonal spreading at the locking parts 13, which, diagonally measured, is at least 1 mm and still better is 2 mm.

Preferably, the attachment elements allow a dismountable attachment, such that, during recycling, the different materials can be separated easily from each other and/or, with incorrect mounting, dismantling is possible. In the example of figure 3, this can be performed, for example, by exerting a large pull-out force on the attachment element 12 by means of a tool. In examples as those of figures 26 and 49 to 61, this is possible by pulling out the plug 47, the second part 82, respectively, after which the legs with the locking parts 13 regain their unlocked position.

In examples which, as aforementioned, comprise a first part 81 and a second part 82, the whole can be designed such that the second part arrives with an audible click effect in the final position, by which the installing person obtains an indication that the second part has arrived in the final position and the locking has been completed.

The locking elements can be made of any suitable materials. In practice, metal and/or synthetic material will be preferred. In case of synthetic material, particularly good features for this application will be obtained by nylon, polyamides and the like.

In a particular embodiment, the first part 81 consists of synthetic material, whereas the second part 82 is formed of metal.

According to another particular combination, the furniture fitting element substantially consists of metal, whereas at least a portion of the attachment element, for example, at least the first part 81, consists of synthetic material, which is particularly useful with embodiments in which the attachment element or a part thereof, for example, is factory pre-mounted on the furniture fitting element.

It is noted that the attachments described by means of the figures often are represented in combination with a well-defined furniture fitting element, for example, a drawer guide. However, it is clear that each represented attachment can be applied at choice with any other form of furniture fitting element.

In a particular embodiment, the invention can also be applied for fixing profiles, for example, edge profiles, on furniture parts. Herein, this may relate, for example, to profiles which have a U-shaped seat and which surround one or more panels at an edge thereof, wherein the profiles are attached to the panels by means of attachments 4 which are made in accordance with the invention, for example, attachments such as illustrated in figure 52, with attachment elements which are provided in the profiles through openings and are pressed on in underlying openings comprising a collar 11. A similar principle can also be applied with other profiles and laths, for example, with profiles with an L-shaped portion which are provided on a border around one or more furniture panels. This application shows its benefits best with sliding doors, in particular when the latter are composed of a plurality of panels.

Other components of sliding doors can also be attached to furniture parts or to each other by means of attachments according to the invention. A practical embodiment consists, for example, in the attachment of guiding profiles for sliding doors on furniture panels, wherein this can relate to an upper as well as to a lower guiding profile. It is clear that hereby all these profiles can be provided on the respective furniture parts without the use of tools, which is particularly useful when relating to furniture which are marketed in dismantled form and have to be assembled on location.

In respect to sliding doors, it is noted that also the use of an additional part 124, as illustrated in figure 80, which is intended for offering additional support, shows its benefits best when it is applied in a furniture fitting element 3 which consists of a support, more particularly a support or attachment plate, for a bogie wheel of such sliding door. Such bogie wheel 153 is schematically illustrated in figure 80. In fact, the major support or suspension forces between the support or attachment plate and the respective furniture part 2 then are counteracted by the part 124, whereas the attachment 4 according to the invention then only substantially has the function of retaining the support or attachment plate on the furniture part, more particularly the sliding door. It is clear that the support-forming part 124 can have any form and is not restricted to the embodiment of figure 80. Also, a plurality of support-forming parts 124 can be provided on one and the same support or attachment plate or other furniture fitting element 3, for example, in the form of two or more parallel protruding pins which fit into respective openings.

It is also noted that by the above-mentioned activating means, more particularly the second part 82, a means can be understood which displaces the locking parts 13 into a locking position, as a means which exclusively has the aim of holding the locking parts 13 in a locking position.

It is noted that the invention also relates to embodiments wherein the opening 10 comprises two or more collars 11 which are realized on different depths, and wherein the attachment element comprises a plurality of locking parts, which are situated on different depths and which work in conjunction with the respective collars.

It is noted that the invention primarily offers a solution for attaching fittings to a solid plate, such in a simple manner by realizing an opening with a collar therein, without the necessity that the plate must be provided with laths, edge-finishing laths or the like for having the attachment elements engage there behind.

It is clear that the invention can also be applied for attaching an intermediate piece to a piece of furniture, which intermediate piece in its turn is intended for carrying a furniture fitting element.

The present invention is in no way limited to the embodiments described as an example and represented in the figures; on the contrary, such piece of furniture, as well as the attachments applied therewith for the furniture fittings, the attachment elements applied therein and the furniture fitting elements which are provided with such attachment elements, can be realized according to various variants without leaving the scope of the invention as defined in the appended claims.

## Claims

1. Piece of furniture, which comprises one or more furniture parts (2) as well as one or more furniture fitting elements (3), which are connected to the furniture parts (2) via attachments (4), wherein at least one of said attachments (4) is formed by, on the one hand, an opening (10) in the wall (8) of the respective furniture part (2), wherein this opening (10) is provided with at least one collar (11), and, on the other hand, an attachment element (12) which works in conjunction with the respective furniture fitting element (3) and which can be provided in said opening (10), wherein this attachment element (12) is provided with one or more locking parts (13) which engage behind the collar (11) or collars; wherein the locking parts (13) comprise activating means for bringing them from a first condition, in which the locking parts (13) do not cooperate with the collar (11) or cooperate therewith only partially, into a second condition in which they positively engage behind the collar (11); wherein the attachment element consists at least of a first part (81) and a second part (82), which either are connected to each other or not, wherein the first part (81) comprises one or more of said locking parts (13) and the second part (82) forms the activating means for activating the locking parts and/or holding them in their engaged position; chracterized in that the attachment element (12) comprises locking means which can lock the first part (81) and the second part (82) in mutual respect when said one or more locking parts (13) engage behind the collar or collars, wherein said wall forms part of a whether or not covered particle board; that this particle board comprises at least two layers of particle material, a first layer (62) which substantially is present in the core of the particle board, and a second layer (63) which is present close to the wall, wherein the second layer consists of on average finer particle material than the first layer; and that said collar (11) substantially is made of the finer particle material, and preferably the surface itself of the collar (11) still is formed in the finer particle material.

2. Piece of furniture according to claim 1, **characterized in that** the opening (10) is configured as a local opening or hole.

3. Piece of furniture according to claim 1 or 2, **characterized in that** the opening (10) is configured as an opening with a bottom, more particularly as a blind hole.

4. Piece of furniture according to any of the preceding claims, **characterized in that** the opening (10), including the collar (11), is realized in one piece in the wall of the respective furniture part (2), more particularly in the board material, of which said wall forms a part.

5. Piece of furniture according to any of the preceding claims, **characterized in that** the attachment element (12) provides for an attachment mechanism allowing a toolless assembly and preferably more particularly allowing a manual assembly without necessitating any tool.

6. Piece of furniture according to any of the preceding claims, **characterized in that** the attachment element (12) comprises an attachment part with one or more locking parts (13) which are movable radially outward in order to engage behind said collar (11) or collars.

7. Piece of furniture according to claim 6, **characterized in that** the attachment element (12) comprises two or more locking parts (13) which are arranged distributed along the circumference; that the locking parts (13) are situated on elastically radially bendable lips (22), wherein these locking parts (13) are made as hook-shaped outward-directed parts; and that the locking parts (13), when they together are located in their most inward-situated condition, circumscribe a volume which fits freely through said opening (10).

8. Piece of furniture according to any of the preceding claims, **characterized in that** the second part (82) is made as a plug-shaped element which can be provided in the first part (81) and in this manner forces and/or holds the locking parts (13) in a locking position.

9. Piece of furniture according to claim 8, **characterized in that** the first part (81) comprises a stop-forming portion (18) which can work in conjunction with the furniture fitting element, as well as locking parts (13) which can work in conjunction with the collar (11).

10. Piece of furniture according to any of the preceding claims, **characterized in that** the attachment element (12) comprises means which retain the second part (82) at the first part (81), in a not yet activated condition of the locking parts.

11. Piece of furniture according to claim 10, **characterized in that** said means consist of any of the following or a combination of two or more of the following possibilities:
- retaining means which retain the second part in the first part;
- retaining means which retain the second part in the first part by means of a locking:
- retaining means which retain the second part in the first part by means of a locking, wherein said locking can be overcome by exerting a certain force thereon;
- retaining means which retain the second part positioned in front of the first part;
- a material connection between the second part and the first part, which preferably is made in one piece with the first part and the second part;
- a material connection which can be broken;
- a material connection between the second part and the first part in the form of a connection string or connection lip;
- a material connection between the second part and the first part in the form of a connection lip, wherein this connection lip comprises a hinge or a folding or tearing zone, preferably such that the lip or the lip portions which are located on opposite sides of the hinge, will extend along the furniture fitting element after mounting.

12. Piece of furniture according to any of the preceding claims, **characterized in that** the attachment element (12) can be detached from the opening (10) and preferably is manually dismountable.

13. Piece of furniture according to any of the preceding claims, **characterized in that** the attachment element (12) is realized as a separate element.

14. Piece of furniture according to claim 13, **characterized in that** the furniture fitting element (3) and/or the attachment element (12) comprises means allowing pre-mounting the attachment element (12) or a part thereof on the furniture fitting element.

15. Piece of furniture according to any of the preceding claims, **characterized in that** the furniture fitting element, by means of the assembly, is retained with a tensioning force against the respective wall by means of the one or more attachment elements.

16. Piece of furniture according to any of the preceding claims, **characterized in that** the respective furniture fitting element (3) relates to a slide for a drawer, a hinge or component of a hinge or a shelf support.

17. Piece of furniture according to any of the preceding claims, **characterized in that** it shows one or more of the following characteristics:
- it relates to a so-called RTA-piece of furniture (Ready-to-assemble piece of furniture);
- it relates to a piece of furniture which can be assembled entirely without tools;
- it relates to a flat-pack piece of furniture;
- it relates to a piece of kitchen furniture or a carcass for a piece of kitchen furniture;
- it relates to a piece of bathroom furniture or a carcass for a piece of bathroom furniture;
- it relates to a piece of furniture wherein the majority of the furniture panels engage in each other by means of locking profiles, preferably profiles formed in one piece in the panel material.

## Patentansprüche

1. Möbelstück, das ein oder mehrere Möbelteile (2) sowie ein oder mehrere Möbelbeschlagelemente (3) umfasst, die über Befestigungen (4) mit den Möbelteilen (2) verbunden sind, wobei mindestens eine der Befestigungen (4) einerseits durch eine Öffnung (10) in der Wand (8) des jeweiligen Möbelteils (2) gebildet wird, wobei diese Öffnung (10) mit mindestens einer Manschette (11) versehen ist, und andererseits durch ein Befestigungselement (12), das in Verbindung mit dem jeweiligen Möbelbeschlagelement (3) funktioniert und das in der Öffnung (10) bereitgestellt sein kann, wobei dieses Befestigungselement (12) mit einem oder mehreren Verriegelungsteilen (13) versehen ist, die hinter der Manschette (11) oder den Manschetten eingreifen; wobei die Verriegelungsteile (13) Aktivierungsmittel umfassen, um sie aus einem ersten Zustand, in dem die Verriegelungsteile (13) nicht mit der Manschette (11) zusammenwirken oder mit ihr nur teilweise zusammenwirken, in einen zweiten Zustand zu bringen, in dem sie hinter der Manschette (11) formschlüssig eingreifen; wobei das Befestigungselement aus mindestens einem ersten Teil (81) und einem zweiten Teil (82) besteht, die entweder miteinander verbunden sind oder nicht, wobei der erste Teil (81) einen oder mehrere der Verriegelungsteile (13) umfasst und der zweite Teil (82) die Aktivierungsmittel zum Aktivieren der Verriegelungsteile und/oder Halten dieser in ihrer eingegriffenen Position bildet; **dadurch gekennzeichnet, dass** das Befestigungselement (12) Verriegelungsmittel umfasst, die den ersten Teil (81) und den zweiten Teil (82) in gegenseitiger Beziehung verriegeln können, wenn das eine oder die mehreren Verriegelungsteile (13) hinter der Manschette oder den Manschetten eingreifen, wobei die Wand einen Teil einer Spanplatte, ob bedeckt oder nicht, bildet; dass diese Spanplatte mindestens zwei Schichten von Partikelmaterial umfasst, eine erste Schicht (62), die im Wesentlichen im Kern der Spanplatte vorhanden ist, und eine zweite Schicht (63), die nahe der Wand vorhanden ist, wobei die zweite Schicht aus durchschnittlich feinerem Partikelmaterial als die erste Schicht besteht; und dass die Manschette (11) im Wesentlichen aus dem feineren Partikelmaterial hergestellt ist und vorzugsweise die Oberfläche selbst der Manschette (11) immer noch in dem feineren Partikelmaterial ausgebildet ist.

2. Möbelstück nach Anspruch 1, **dadurch gekennzeichnet, dass** die Öffnung (10) als eine lokale Öffnung oder ein lokales Loch ausgelegt ist.

3. Möbelstück nach Anspruch 1 oder 2, **dadurch gekennzeichnet, dass** die Öffnung (10) als eine Öffnung mit einem Boden, insbesondere als ein Blindloch ausgelegt ist.

4. Möbelstück nach einem der vorstehenden Ansprüche, **dadurch gekennzeichnet, dass** die Öffnung (10), einschließlich der Manschette (11), in einem Stück in der Wand des jeweiligen Möbelteils (2), insbesondere in dem Plattenmaterial, von dem die Wand einen Teil bildet, ausgeführt ist.

5. Möbelstück nach einem der vorstehenden Ansprüche, **dadurch gekennzeichnet, dass** das Befestigungselement (12) einen Befestigungsmechanismus vorsieht, der eine werkzeuglose Montage ermöglicht und vorzugsweise insbesondere eine manuelle Montage ermöglicht, ohne Werkzeug notwendig zu machen.

6. Möbelstück nach einem der vorstehenden Ansprüche, **dadurch gekennzeichnet, dass** das Befestigungselement (12) ein Befestigungsteil mit einem oder mehreren Verriegelungsteilen (13) umfasst, die radial nach außen beweglich sind, um hinter der Manschette (11) oder den Manschetten einzugreifen.

7. Möbelstück nach Anspruch 6, **dadurch gekennzeichnet, dass** das Befestigungselement (12) zwei oder mehr Verriegelungsteile (13) umfasst, die entlang des Umfangs verteilt angeordnet sind; dass sich die Verriegelungsteile (13) an elastisch radial biegbaren Lippen (22) befinden, wobei diese Verriegelungsteile (13) als hakenförmige nach außen gerichtete Teile hergestellt sind; und dass die Verriegelungsteile (13), wenn sie sich zusammen in ihrem am innersten liegenden Zustand befinden, ein Volumen abgrenzen, das frei durch die Öffnung (10) passt.

8. Möbelstück nach einem der vorstehenden Ansprüche, **dadurch gekennzeichnet, dass** der zweite Teil (82) als ein steckerförmiges Element hergestellt ist, das im ersten Teil (81) bereitgestellt sein kann und auf diese Weise die Verriegelungsteile (13) in eine Verriegelungsposition zwingt und/oder in einer Verriegelungsposition hält.

9. Möbelstück nach Anspruch 8, **dadurch gekennzeichnet, dass** der erste Teil (81) einen Anschlag bildenden Abschnitt (18), der in Verbindung mit dem Möbelbeschlagelement funktionieren kann, sowie Verriegelungsteile (13) umfasst, die in Verbindung mit der Manschette (11) funktionieren können.

10. Möbelstück nach einem der vorstehenden Ansprüche, **dadurch gekennzeichnet, dass** das Befestigungselement (12) Mittel umfasst, die den zweiten Teil (82) am ersten Teil (81) in einem noch nicht aktivierten Zustand der Verriegelungsteile halten.

11. Möbelstück nach Anspruch 10, **dadurch gekennzeichnet, dass** die Mittel aus einem des Folgenden oder einer Kombination von zwei oder mehr der folgenden Möglichkeiten bestehen:
- Haltemittel, die den zweiten Teil im ersten Teil halten;
- Haltemittel, die den zweiten Teil im ersten Teil mittels einer Verriegelung halten:
- Haltemittel, die den zweiten Teil im ersten Teil mittels einer Verriegelung halten, wobei die Verriegelung durch Ausüben einer bestimmten Kraft darauf beseitigt werden kann;
- Haltemittel, die den zweiten Teil vor dem ersten Teil positioniert halten;
- eine Materialverbindung zwischen dem zweiten Teil und dem ersten Teil, die vorzugsweise in einem Stück mit dem ersten Teil und dem zweiten Teil hergestellt ist;
- eine Materialverbindung, die gebrochen werden kann;
- eine Materialverbindung zwischen dem zweiten Teil und dem ersten Teil in der Form einer Verbindungsschnur oder einer Verbindungslippe;
- eine Materialverbindung zwischen dem zweiten Teil und dem ersten Teil in der Form einer Verbindungslippe, wobei diese Verbindungslippe ein Scharnier oder eine Falt- oder Reißzone umfasst, vorzugsweise so, dass die Lippe oder die sich auf gegenüberliegenden Seiten des Scharniers befindenden Lippenabschnitte sich nach der Montage entlang des Möbelbeschlags erstrecken.

12. Möbelstück nach einem der vorstehenden Ansprüche, **dadurch gekennzeichnet, dass** das Befestigungselement (12) von der Öffnung (10) gelöst werden kann und vorzugsweise manuell demontierbar ist.

13. Möbelstück nach einem der vorstehenden Ansprüche, **dadurch gekennzeichnet, dass** das Befestigungselement (12) als ein separates Element ausgeführt ist.

14. Möbelstück nach Anspruch 13, **dadurch gekennzeichnet, dass** das Möbelbeschlagelement (3) und/oder das Befestigungselement (12) Mittel umfasst, die eine Vormontage des Befestigungselements (12) oder eines Teils davon am Möbelbeschlagelement ermöglichen.

15. Möbelstück nach einem der vorstehenden Ansprüche, **dadurch gekennzeichnet, dass** das Möbelbeschlagelement mittels der Montage mit einer Spannkraft gegen die jeweilige Wand mittels des einen oder der mehreren Befestigungselemente gehalten wird.

16. Möbelstück nach einem der vorstehenden Ansprüche, **dadurch gekennzeichnet, dass** sich das jeweilige Möbelbeschlagelement (3) auf eine Gleitschiene für eine Schublade, ein Scharnier oder eine Komponente eines Scharniers oder eine Regalstütze bezieht.

17. Möbelstück nach einem der vorstehenden Ansprüche, **dadurch gekennzeichnet, dass** es eine oder mehrere der folgenden Eigenschaften aufweist:
- es bezieht sich auf ein sogenanntes RTA-Möbelstück (montagefertiges Möbelstück);
- es bezieht sich auf ein Möbelstück, das vollständig ohne Werkzeug zusammengebaut werden kann;
- es bezieht sich auf ein Selbstaufbau-Möbelstück;
- es bezieht sich auf ein Küchenmöbelstück oder einen Korpus für ein Küchenmöbelstück;
- es bezieht sich auf ein Badmöbelstück oder einen Korpus für ein Badmöbelstück;
- es bezieht sich auf ein Möbelstück, bei dem die Mehrzahl der Möbelplatten mittels Verriegelungsprofilen, vorzugsweise Profilen, die in einem Stück in dem Plattenmaterial ausgebildet sind, ineinandergreifen.

## Revendications

1. Meuble qui comprend un ou plusieurs éléments de mobilier (2) de même qu'un ou plusieurs éléments d'assemblage de mobilier (3) qui sont reliés aux éléments de mobilier (2) par l'intermédiaire de fixations (4); dans lequel au moins une desdites fixations (4) est réalisée, d'une part par l'intermédiaire d'une ouverture (10) dans la paroi (8) de l'élément de mobilier respectif (2) ; dans lequel cette ouverture (10) est munie d'au moins un collier (11); et, d'autre part par l'intermédiaire d'un élément de fixation (12) qui travaille de manière conjointe avec l'élément d'assemblage de mobilier respectif (3) et qui peut être prévu dans ladite ouverture (10) ; dans lequel cet élément de fixation (12) est muni d'un ou de plusieurs éléments de verrouillage (13) qui entrent en contact avec le collier (11) ou des colliers en venant se placer derrière celui/ceux-ci ; dans lequel les éléments de verrouillage (13) comprennent des moyens d'activation qui sont destinés à les amener à partir d'un premier état dans lequel les éléments de verrouillage (13) ne coopèrent pas avec le collier (11) ou coopèrent avec celui-ci uniquement de manière partielle jusque dans un deuxième état dans lequel ils entrent en contact par voie mécanique avec le collier (11) en venant se placer derrière celui-ci ; dans lequel l'élément de fixation est constitué au moins par une première partie (81) et par une deuxième partie (82), qui sont reliées ou non l'une à l'autre ; dans lequel la première partie (81) comprend un ou plusieurs desdits éléments de verrouillage (13) et la deuxième partie (82) forme les moyens d'activation qui sont destinés à activer les éléments de verrouillage et/ou à les maintenir dans leur position de mise en contact; **caractérisé en ce que** l'élément de fixation (12) comprend un moyen de verrouillage qui permet de verrouiller la première partie (81) et la deuxième partie (82) l'une par rapport à l'autre, lorsque lesdits un ou plusieurs éléments de verrouillage (13) entrent en contact avec le collier (11) ou des colliers en venant se placer derrière celui/ceux-ci ; dans lequel ladite paroi forme une partie d'un panneau de particules revêtu ou non; **en ce que** ce panneau de particules comprend au moins deux couches d'une matière particulaire, une première couche (62) qui est essentiellement présente dans la partie centrale du panneau de particules, et une deuxième couche (63) qui est présente à proximité de la paroi ; dans lequel la deuxième couche est constituée en moyenne d'une matière particulaire plus fine que celle de la première couche ; et **en ce que** ledit collier (11) est essentiellement réalisé à partir de la matière particulaire plus fine; et de préférence la surface elle-même du collier (11) est encore réalisée dans la matière particulaire plus fine.

2. Meuble selon la revendication 1, **caractérisé en ce que** l'ouverture (10) est configurée sous la forme d'une ouverture ou d'un trou local.

3. Meuble selon la revendication 1 ou 2, **caractérisé en ce que** l'ouverture (10) est configurée sous la forme d'une ouverture qui comporte une base, de manière plus particulière sous la forme d'un trou borgne.

4. Meuble selon l'une quelconque des revendications précédentes, **caractérisé en ce que** l'ouverture (10), y compris le collier (11) sont réalisés en une seule pièce dans la paroi de l'élément de mobilier respectif (2), de manière plus particulière dans la matière de panneau dont fait partie ladite paroi.

5. Meuble selon l'une quelconque des revendications précédentes, **caractérisé en ce que** l'élément de fixation (12) procure un mécanisme de fixation qui permet d'envisager un montage sans outils et de préférence, de manière plus particulière, qui permet de réaliser un montage à la main qui ne nécessite aucun outil.

6. Meuble selon l'une quelconque des revendications précédentes, **caractérisé en ce que** l'élément de fixation (12) comprend un élément de fixation qui comprend un ou plusieurs éléments de verrouillage (13) qui sont mobiles vers l'extérieur dans la direction radiale dans le but d'entrer en contact avec ledit collier (11) ou lesdits colliers en venant se placer derrière celui/ceux-ci.

7. Meuble selon la revendication 6, **caractérisé en ce que** l'élément de fixation (12) comprend deux éléments de verrouillage (13) ou plus qui sont disposés le long de la circonférence ; **en ce que** les éléments de verrouillage (13) sont situés sur des lèvres (22) qui peuvent être soumises à un cintrage de manière élastique dans la direction radiale ; dans lequel ces éléments de verrouillage (13) sont réalisés sous la forme d'éléments orientés vers l'extérieur qui possèdent une configuration en forme de crochets ; et **en ce que** les éléments de verrouillage (13), lorsqu'ils sont disposés de manière conjointe dans l'état dans lequel ils sont situé le plus à l'intérieur, circonscrivent un volume qui peut venir librement s'insérer dans ladite ouverture (10).

8. Meuble selon l'une quelconque des revendications précédentes, **caractérisé en ce que** la deuxième partie (82) est réalisée sous la forme d'un élément qui possède une configuration en forme de cheville, qui peut être prévu dans la première partie (81) et qui, de cette manière, force et/ou maintient les éléments de verrouillage (13) dans une position de verrouillage.

9. Meuble selon la revendication 8, **caractérisé en ce que** la première partie (81) comprend une portion (18) qui forme un arrêt, qui peut travailler de manière conjointe avec l'élément d'assemblage de mobilier, ainsi que des éléments de verrouillage (13) qui peuvent travailler de manière conjointe avec le collier (11).

10. Meuble selon l'une quelconque des revendications précédentes, **caractérisé en ce que** l'élément de fixation (12) comprend des moyens qui retiennent la deuxième partie (82) à la première partie (81) dans un état des éléments de verrouillage, qui n'est pas encore activé.

11. Meuble selon la revendication 10, **caractérisé en ce que** les moyens en question sont constitués par l'un quelconque des moyens indiqués ci-après ou par une combinaison de deux des possibilités suivantes ou plus :
- des moyens de retenue qui retiennent la deuxième partie dans la première partie ;
- des moyens de retenue qui retiennent la deuxième partie dans la première partie au moyen d'un verrouillage ;
- des moyens de retenue qui retiennent la deuxième partie dans la première partie au moyen d'un verrouillage ; dans lequel ledit verrouillage peut être vaincu en exerçant une certaine force sur le verrouillage en question ;
- des moyens de retenue qui retiennent la deuxième partie dans une position à l'avant de la première partie ;
- une liaison matérielle entre la deuxième partie et la première partie, qui est de préférence réalisée en une seule pièce avec la première partie et la deuxième partie ;
- une liaison matérielle qui peut être rompue ;
- une liaison matérielle entre la deuxième partie et la première partie sous la forme d'une chaîne de raccordement ou d'une lèvre de raccordement ;
- une liaison matérielle entre la deuxième partie et la première partie sous la forme d'une lèvre de raccordement ; dans lequel cette lèvre de raccordement comprend une articulation ou une zone de pliage ou de déchirure; de préférence, d'une manière telle que la lèvre, ou les portions de lèvres qui sont situées sur des côtés opposés de l'articulation, va/vont s'étendre le long de l'élément d'assemblage de mobilier après le montage.

12. Meuble selon l'une quelconque des revendications précédentes, **caractérisé en ce que** l'élément de fixation (12) peut être détaché de l'ouverture (10) et de préférence peut être démonté à la main.

13. Meuble selon l'une quelconque des revendications précédentes, **caractérisé en ce que** l'élément de fixation (12) est réalisé sous la forme d'un élément séparé.

14. Meuble selon la revendication 13, **caractérisé en ce que** l'élément d'assemblage de mobilier (3) et/ou l'élément de fixation (12) comprend des moyens qui permettent le montage préalable de l'élément de fixation (12) ou d'une partie de ce dernier sur l'élément d'assemblage de mobilier.

15. Meuble selon l'une quelconque des revendications précédentes, **caractérisé en ce que** l'élément d'assemblage de mobilier, au moyen du montage, est retenu avec une force de tension contre la paroi respective au moyen desdits un ou plusieurs éléments de fixation.

16. Meuble selon l'une quelconque des revendications précédentes, **caractérisé en ce que** l'élément d'assemblage de mobilier respectif (3) concerne un coulisseau pour un tiroir, une articulation ou un composant d'une articulation ou un support d'étagère.

17. Meuble selon l'une quelconque des revendications précédentes, **caractérisé en ce qu'**il présente une ou plusieurs des caractéristiques indiquées ci-après :
- il concerne ce qu'il est convenu d'appeler un meuble RTA (meuble prêt à être assemblé) ;
- il concerne un meuble qui peut être assemblé entièrement en l'absence d'outils ;
- il concerne un meuble en kit ;
- il concerne un meuble de cuisine ou une armature pour un meuble de cuisine ;
- il concerne un meuble de salle de bains ou une armature pour un meuble de salle de bains ;
- il concerne un meuble dans lequel la majeure partie des panneaux du mobilier entre en contact les uns avec les autres au moyen de profilés de verrouillage, de préférence des profilés qui sont réalisés en une seule pièce dans la matière de panneau.
